# EUROPEAN PATENT APPLICATION

(11) **EP 4 818 812 A2**
(43) Date of publication of application: **07.10.2026**
(21) Application number: 26164181.5
(22) Date of filing: 12.03.2026
(51) Int. Cl.: G03G 15/00, G06F 1/00

(54) **IMAGE FORMING APPARATUS**

(30) Priority: 14.03.2025 JP 2025041569
(71) Applicant: Canon Kabushiki Kaisha, Tokyo 146-8501 (JP)
(72) Inventor: KUROKI, Kenji, Ohta-ku, Tokyo, 146-8501 (JP); YOSHIMOTO, Tetsuhiro, Ohta-ku, Tokyo, 146-8501 (JP); IKEDA, Shinya, Ohta-ku, Tokyo, 146-8501 (JP); TANAKA, Nobuhiko, Ohta-ku, Tokyo, 146-8501 (JP); NOMURA, Yoshihisa, Ohta-ku, Tokyo, 146-8501 (JP); KOYAMA, Hayato, Ohta-ku, Tokyo, 146-8501 (JP); SUZUKI, Shinya, Ohta-ku, Tokyo, 146-8501 (JP)
(74) Representative: TBK

(57) **Abstract**

An image forming apparatus includes (10) an image forming unit configured to form an image on a sheet and a plurality of conveyance units configured to convey the sheet. A main control unit controls the image forming unit and the conveyance units in accordance with a conveyance position of the sheet. A plurality of sub control units control the image forming unit or the conveyance units based on a communication signal received from the main control unit. While the main control unit is transmitting information of a first communication type for a specific sub control unit over a communication line corresponding to the specific sub control unit, the main control unit inserts transmission of information of a second communication type into an interval between successive portions of the information of the first communication type.

## Description

### TECHNICAL FIELD

The present disclosure relates to an image forming apparatus.

### BACKGROUND

An image forming apparatus includes a plurality of control boards, which transmit and receive control information through serial communication. To suppress image defects such as color shift and misalignment, it is necessary to execute operations at appropriate times according to the conveyance position of a sheet. Japanese Patent Laid-Open No. 2023-030584 describes a communication system that sends control instructions on one communication line while transmitting information indicating when to execute the control instructions on another signal line.

### SUMMARY

The method of Japanese Patent Laid-Open No. 2023-030584 makes it possible to rotate a conveyance roller, start forming an image, and the like at appropriate times. However, both the number of communication lines and the number of signal lines for transmitting the timing increase in proportion to the number of slaves receiving the control instructions.

The present disclosure in its first aspect provides an image forming apparatus as specified in claim 1. Optional features are specified in claims 2 to 19. The present disclosure in its second aspect provides an image forming apparatus as specified in claim 20. The present disclosure in its third aspect provides an image forming apparatus as specified in claim 21. The present disclosure in its fourth aspect provides an image forming apparatus as specified in claim 22. Optional feature is specified in claim 23.

Features of the present disclosure will become apparent from the following description of embodiments with reference to the attached drawings.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
Fig. 1A is a diagram illustrating an image forming apparatus.
Fig. 1B is a diagram illustrating an image forming apparatus.
Fig. 2 is a diagram illustrating a control system.
Fig. 3 is a diagram illustrating an edge device.
Fig. 4 is a diagram illustrating an edge device.
Fig. 5 is a diagram illustrating an edge device.
Fig. 6 is a diagram illustrating an edge device.
Fig. 7 is a diagram illustrating a feeding portion.
Fig. 8 is a diagram illustrating a discharge portion.
Fig. 9 is a block diagram illustrating a central device.
Fig. 10 is a block diagram illustrating a zone device.
Fig. 11 is a block diagram illustrating an edge device.
Fig. 12 is a diagram illustrating a communication sequence.
Fig. 13 is a diagram illustrating a communication format.
Fig. 14 is a flowchart illustrating communication processing by a central device.
Fig. 15 is a flowchart illustrating communication processing by an edge device.
Fig. 16 is a flowchart illustrating a method for arranging timing information.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### 1. First Embodiment

### 1-1. Apparatus Configuration

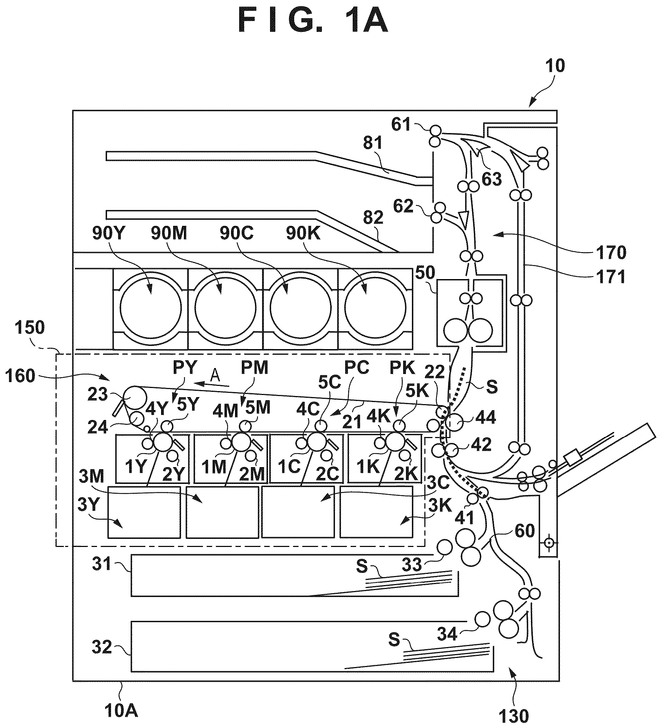

Fig. 1A illustrates the overall structure of an image forming apparatus 10. In the following descriptions, the term "front" refers to a front side of the image forming apparatus 10 illustrated in Fig. 1A. The term "back (rear surface)" refers to a back side of the image forming apparatus 10 illustrated in Fig. 1A. The term "right" refers to a right side of the image forming apparatus 10 illustrated in Fig. 1A. The term "left" refers to a left side of the image forming apparatus 10 illustrated in Fig. 1A. The front side is the side from which a user operates the image forming apparatus 10 when performing maintenance work. For example, a console is disposed on the front side. Cassettes 31 and 32 in which a recording material S is held are pulled out in the direction from the back side to the front side. The term "vertical direction" refers to the vertical direction when the image forming apparatus 10 is installed on an installation surface such as a floor. As such, the downward direction is the gravitational direction, and the upward direction is the direction opposite from the gravitational direction.

The image forming apparatus 10 includes a main body 10A. The main body 10A includes an image forming engine 150. The image forming engine 150 forms a toner image on the recording material S on the basis of an image signal received from an external terminal (not shown), such as a document reading apparatus that reads an image on a document or a personal computer. The image forming engine 150 includes image forming portions PY, PM, PC, and PK, and an intermediate transfer belt unit 160. The image forming portions PY, PM, PC, and PK form yellow (Y), magenta (M), cyan (C), and black (K) toner images, respectively, and transfer the toner images to an intermediate transfer belt 21.

A supply unit 130 supplies the recording material S to the image forming engine 150. The supply unit 130 includes the cassettes 31 and 32, feed rollers 33 and 34, and the like. Each of the cassettes 31 and 32 holds a plurality of the recording materials S. The feed roller 33 picks up the recording material S held in the cassette 31 and feeds the recording material S to a conveyance path 60. The feed roller 34 picks up the recording material S held in the cassette 32 and feeds the recording material S to the conveyance path 60. The conveyance path 60 is provided to convey the recording material S from the bottom to the top (what is known as a "vertical conveyance method"), for example. Various types of sheet materials, such as paper (e.g., plain paper, heavy paper, rough paper, embossed paper, and coated paper), plastic film, and cloth, can be given as examples of the recording material S.

A preregistration roller pair 41 and a registration roller pair 42 are disposed in the conveyance path 60. The preregistration roller pair 41 corrects skew in the recording material S. Specifically, a leading end of the recording material S conveyed by the preregistration roller pair 41 contacts a nip part of the registration roller pair 42, which is stopped and not rotating. As a result, the recording material S loops and the skew in the recording material S is corrected. The intermediate transfer belt 21 is disposed above the registration roller pair 42, which is constituted by a pair of rotating members. The registration roller pair 42 conveys the recording material S to a secondary transfer portion in accordance with the timing at which the toner image on the intermediate transfer belt 21 is transferred onto the recording material S. The registration roller pair 42 is disposed upstream from the secondary transfer portion, and at a position closest to the secondary transfer portion, in a conveyance direction of the recording material S conveyed along the conveyance path 60 (the upward direction). The secondary transfer portion is formed by a secondary transfer inner roller 22 and a secondary transfer outer roller 44 provided on opposite sides of the intermediate transfer belt 21 serving as a transfer member (a first transfer member and an intermediate transfer member). The secondary transfer portion is a nip part that transfers the toner image from the intermediate transfer belt 21 onto the recording material S by applying a predetermined pressure and a secondary transfer voltage to the recording material S and the toner image.

A process for forming an image that arrives at the secondary transfer portion at the same timing as the conveyance process of the recording material S to the secondary transfer portion described above will be described next. First, the image forming portions PY to PK will be described. However, the image forming portions PY to PK are basically the same aside from the color of the toner. Accordingly, the yellow image forming portion PY will be described as a representative example. The descriptions of the image forming portion PY can also be applied as descriptions of the image forming portions PM, PC, and PK.

The image forming portion PY includes a photosensitive drum 1Y, a charger 2Y, an exposure device 3Y, and a developer 4Y. The charger 2Y uniformly charges the surface of the photosensitive drum 1Y, which rotates, using a predetermined charging voltage. The exposure device 3Y is driven on the basis of an image signal, and irradiates the surface of the rotating photosensitive drum 1Y with a laser beam. This forms an electrostatic latent image. When the photosensitive drum 1Y rotates, the electrostatic latent image is conveyed to the developer 4Y. The developer 4Y develops the electrostatic latent image using toner supplied from a toner bottle 90Y, and forms a toner image. The developer 4Y has a developing sleeve that carries a developing agent including toner and a carrier, and the toner is supplied to the photosensitive drum 1Y by the developing sleeve rotating. A predetermined developing voltage is applied to the developing sleeve. Toner is consumed by the development. The toner bottle 90Y is a holding container that holds toner for refilling. The toner bottle 90Y is rotationally driven at an appropriate timing, and the developer 4Y is replenished with toner from the toner bottle 90Y.

A primary transfer roller 5Y is disposed opposite the photosensitive drum 1Y, with the intermediate transfer belt 21 located therebetween. A primary transfer voltage is applied to the primary transfer roller 5Y, and the toner image formed on the photosensitive drum 1Y is transferred onto the intermediate transfer belt 21 (primary transfer). Toner remaining on the photosensitive drum 1Y after the primary transfer is complete is removed by a photosensitive drum cleaner.

The intermediate transfer belt 21 is an endless belt that is stretched upon the secondary transfer inner roller 22, a driving roller 23, a tension roller 24, and the like, and rotates in the direction of an arrow A in the figure. The image forming portions PY to PK each execute the image forming process in parallel. Toner images of four colors are superimposed on the intermediate transfer belt 21 in order, which forms a full-color image. The toner images are conveyed to the secondary transfer portion as a result of the intermediate transfer belt 21 moving. Note that the above-described primary transfer rollers 5Y to 5K, the intermediate transfer belt 21, the secondary transfer inner roller 22, the driving roller 23, and the tension roller 24 are integrated as the intermediate transfer belt unit 160.

The timings at which the recording material S and the full-color toner image arrive at the secondary transfer portion coincide. As a result, the toner image is transferred from the intermediate transfer belt 21 onto the recording material S (secondary transfer). The toner remaining on the intermediate transfer belt 21 after the secondary transfer is complete is removed by a belt cleaner.

The recording material S onto which the toner image has been transferred is further conveyed along the conveyance path 60 toward a fixer 50. The fixer 50 applies heat and pressure to the recording material S and the toner image. The toner image is fixed on the recording material S as a result. The fixer 50 includes a fixing roller heated by a heater (not shown) and a pressure roller that contacts the fixing roller, which rotates, to form a fixing nip part. The fixer 50 controls the power supplied to the heater such that the temperature of the heater becomes a target temperature. The fixer 50 also rotates the pressure roller at a specified rotational speed.

The recording material S onto which the toner image has been fixed by the fixer 50 is conveyed further upward in the conveyance path 60, and is discharged to the outside by a discharge unit 170. The discharge unit 170 has discharge roller pairs 61 and 62 and a flapper 63. The discharge roller pairs 61 and 62 discharge the recording material S to discharge trays 81 and 82, respectively.

If the operating mode is a double-sided mode, in which a toner image is formed on both surfaces of the recording material S, a toner image is also formed on a second surface of the recording material S on which an image has already been formed on a first surface. Accordingly, the recording material S is transported to a sub conveyance path 171. Specifically, the recording material S is conveyed until a trailing end of the recording material S traverses the flapper 63 as a result of forward rotation of the discharge roller pair 61. The recording material S is then conveyed to the sub conveyance path 171 by rotating the discharge roller pair 61 in reverse. The recording material S conveyed to the sub conveyance path 171 is returned to the registration roller pair 42 again. The subsequent conveyance and image forming process on the second surface are the same as that performed on the first surface. The recording material S on which an image has been formed on the second surface as well is discharged to the outside by the discharge unit 170.

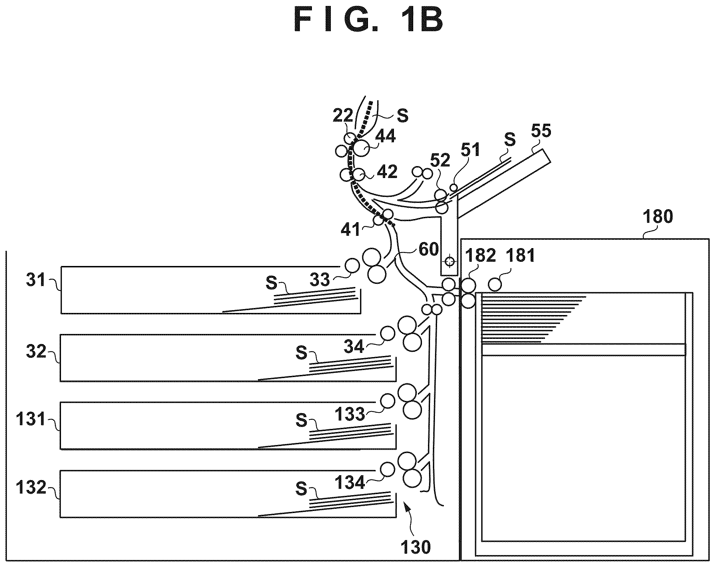

Fig. 1B illustrates an optional cassette 131, an optional cassette 132, and an optional deck 180, which are optional units, connected to the main body 10A.

A feed roller 133 picks up the recording material S held in the optional cassette 131 and feeds the recording material S to the conveyance path 60. A feed roller 134 picks up the recording material S held in the optional cassette 132 and feeds the recording material S to the conveyance path 60. A feed roller 181 picks up the recording material S held in the optional deck 180 and passes the recording material S to a conveyance roller pair 182. The conveyance roller pair 182 conveys the recording material S to the conveyance path 60. Accordingly, the preregistration roller pair 41 also conveys the recording material S fed from the optional cassette 131, the optional cassette 132, or the optional deck 180 toward the registration roller pair 42.

A feed roller 51 passes the recording material S placed on a multi-purpose tray 55 to a pull-out roller 52. The pull-out roller 52 conveys the recording material S to the registration roller pair 42. The pull-out roller 52 operates in the same manner as the preregistration roller pair 41. In other words, the pull-out roller 52 corrects skew in the recording material S by pressing the recording material S against the registration roller pair 42.

### 1-2. Control System

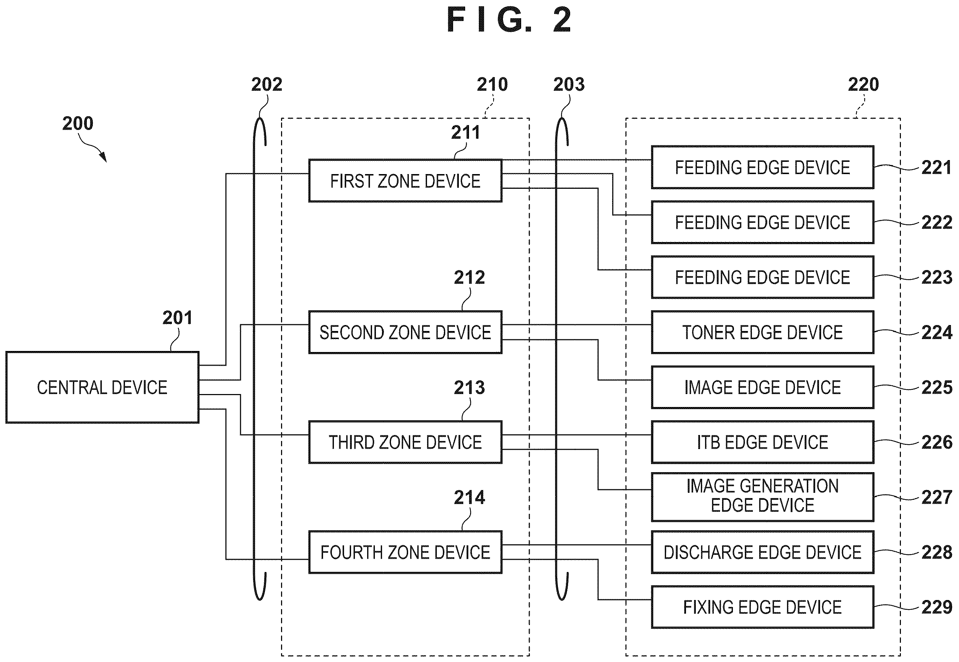

Figs. 2 to 8 illustrate zone architecture used in a control system 200 of the image forming apparatus 10. The control system 200 includes a central device 201, zone devices 210, edge devices 220, and various control mechanisms. Each of the central device 201, the zone devices 210, and the edge devices 220 is implemented by hardware such as a CPU, for example. Some or all of these devices may be implemented by hardware such as largescale integrated circuits (LSI), application-specific integrated circuits (ASICs), fieldprogrammable gate arrays, or the like. Some or all of these devices may be implemented by software and hardware operating in conjunction with each other.

The central device 201 is the highest-level controller in the control system 200, and is called a "main controller". The central device 201 is connected to a plurality of the zone devices 210 by communication lines 202. Furthermore, each of the plurality of zone devices 210 is connected to one or more of the edge devices 220 by communication lines 203. Each of the plurality of edge devices 220 is connected to one or more control mechanisms by signal lines 204. Still more edge devices 220 may be connected at a level lower than the edge devices 220.

The central device 201 controls the plurality of edge devices 220 through any one of the plurality of zone devices 210. In other words, the central device 201 communicates with the edge devices 220 through the zone devices 210 to control the edge devices 220. Each of the zone devices 210 is an intermediate controller that converts control directives (commands) received from the central device 201 into control instructions for the edge devices 220 in accordance with predetermined rules. Furthermore, the zone device 210 identifies a destination for the control instruction and transmits the control instruction to the edge device 220 identified as the destination. A "command" may include the content of the control instruction and identification information indicating the destination of the control instruction. The edge devices 220 control load devices in accordance with the control instructions. Note that "control directive (command)", "control instruction", "control information", and "control signal" are merely names used for convenience, and may therefore be used interchangeably. The zone device 210 may relay communication packets received from the central device 201 to an edge device 220, or relay communication packets received from an edge device 220 to the central device 201.

When a zone device 210 receives output information from an edge device 220 present under that zone device 210 itself, the zone device 210 processes the output information as necessary and transmits the output information to the central device 201.

A variety of forms are used for the connection method between the central device 201 and the zone devices 210, and for the connection method between the zone devices 210 and the edge devices 220. For example, Controller Area Network (CAN), Ethernet (registered trademark), RS-232, RS-485, Low-Voltage Differential Signaling (LVDS), or the like may be used for the physical layer. CANopen, TCP/IP, EtherCAT, or the like, for example, may be used as the communication protocol. These are merely examples, however. The network topology may be in tree form, star form, or ring form, or may be a combination thereof.

As illustrated in Fig. 2, a first zone device 211, a second zone device 212, a third zone device 213, and a fourth zone device 214 are included as the zone devices 210. However, the number of zone devices 210 may be any number.

Upon receiving the print job, the central device 201 determines image forming operations in accordance with the content of the print job. The content of the print job includes, for example, the size of the recording material S (e.g., A4, A4R, or A3), the type of the recording material S (e.g., thickness, basis weight, and presence/absence of coating), the feed port, and the discharge port. The feed port can include, for example, the cassettes 31 and 32, the optional cassettes 131 and 132, the multi-purpose tray 55, and the optional deck 180. The discharge port includes the discharge trays 81 and 82. The size and type of the recording material S are used to set a conveyance speed and a fixing temperature for the recording material S. The central device 201 transmits a fixing command, an image generation command, a feed command, and a discharge command in order in accordance with the image forming operations. Operations performed in response to these control directives will be described hereinafter on a zone-by-zone basis.

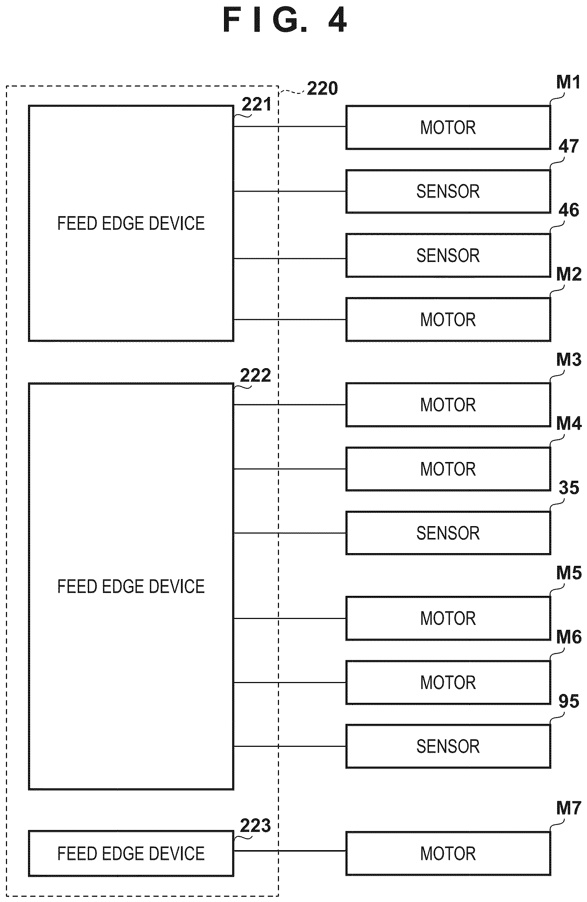

As illustrated in Fig. 2, the first zone device 211 controls feed edge devices 221, 222, and 223. As illustrated in Fig. 4, the feed edge device 221 controls a motor M1 that rotationally drives the preregistration roller pair 41 and a motor M2 that rotationally drives the registration roller pair 42. Furthermore, the feed edge device 221 controls sensors 47 and 46. The sensor 46 is a sheet sensor disposed upstream from the registration roller pair 42. The sensor 47 is a sheet sensor disposed downstream from the preregistration roller pair 41. The sensor 46 is disposed downstream from the sensor 47.

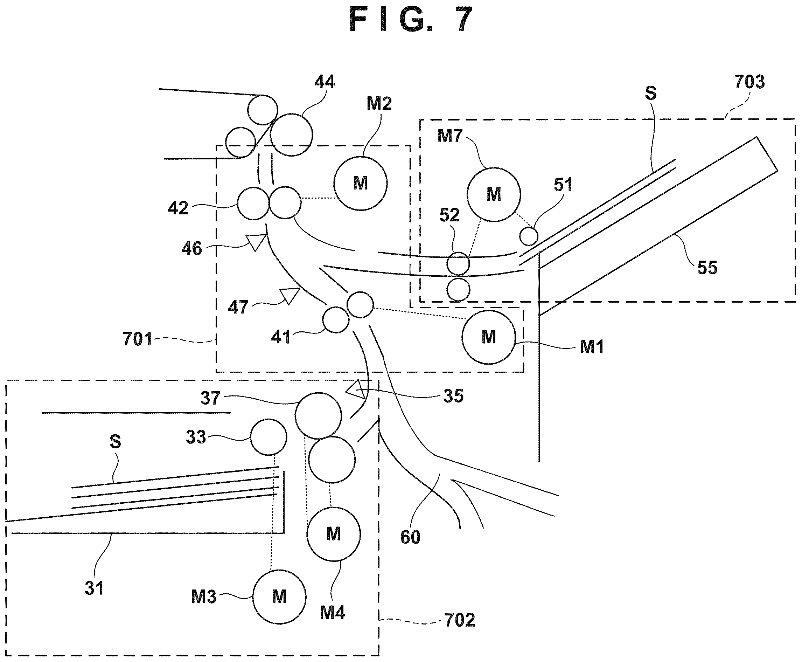

As illustrated in Figs. 4 and 7, the feed edge device 222 controls a motor M3 that rotationally drives the feed roller 33 for the cassette 31 and a motor M4 that rotationally drives a pull-out roller 37. The feed edge device 222 controls a sensor 35. The sensor 35 is a sheet sensor disposed downstream from the feed roller 33 and upstream from the preregistration roller pair 41.

The feed edge device 222 controls a motor M5 that rotationally drives the feed roller 34 for the cassette 32 and a motor M6 that rotationally drives a pull-out roller. The feed edge device 222 controls a sensor 95. The sensor 95 is a sheet sensor disposed downstream from the feed roller 34 and upstream from the preregistration roller pair 41.

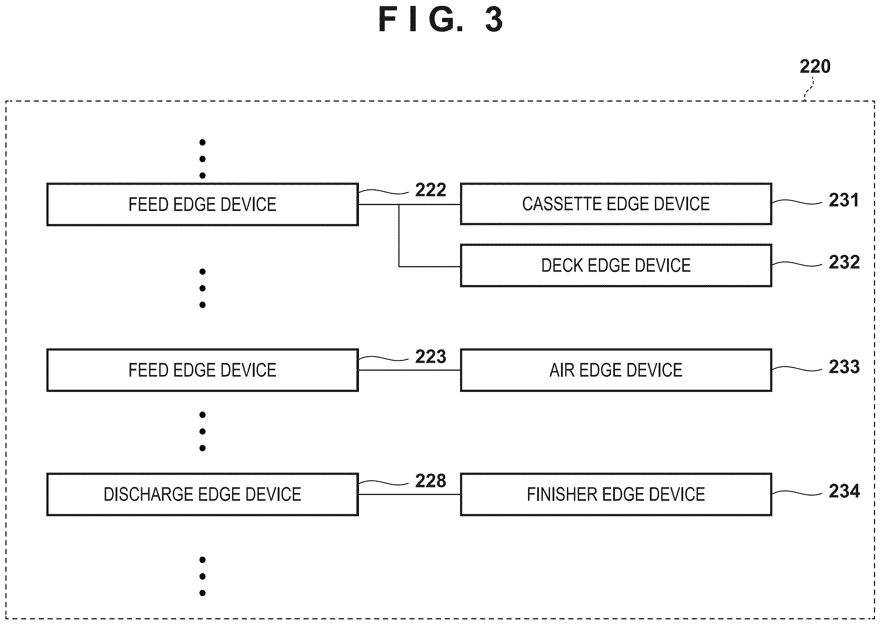

As illustrated in Fig. 3, the feed edge device 222 is further connected to a cassette edge device 231 for controlling the optional cassettes 131 and 134, and a deck edge device 232 for controlling the optional deck 180.

As illustrated in Fig. 4, the feed edge device 223 controls a motor M7. As illustrated in Fig. 7, the motor M7 rotationally drives the feed roller 51 and the pull-out roller 52 of the multi-purpose tray 55.

As illustrated in Fig. 3, the feed edge device 223 controls an air edge device 233. The air edge device 233 controls an optional feed mechanism that separates and feeds a single recording material S from the plurality of recording materials S by blowing air onto the plurality of recording materials S.

Upon receiving a feed command from the central device 201, the first zone device 211 identifies the edge device 220 that is the target of the feed command. The feed command may include a feed instruction and identification information of the feed mechanism that is to execute the feed (e.g., the cassette 31). The first zone device 211 may compute the rotational speeds of the motors M1 and M2 on the basis of the feed command. If the identification information from the feed command indicates the feed edge device 221 and the feed edge device 222, the feed instruction is transmitted to the feed edge devices 221 and 222. Upon receiving the feed instruction, the feed edge device 221 drives the motors M1 and M2 in accordance with the feed instruction. Upon receiving the feed instruction, the feed edge device 222 selects a feed port in accordance with the feed instruction and drives the motors corresponding to the selected feed port (e.g., the motors M3 and M4 or the motors M5 and M6). Upon receiving the feed instruction, the feed edge device 223 drives the motor M7.

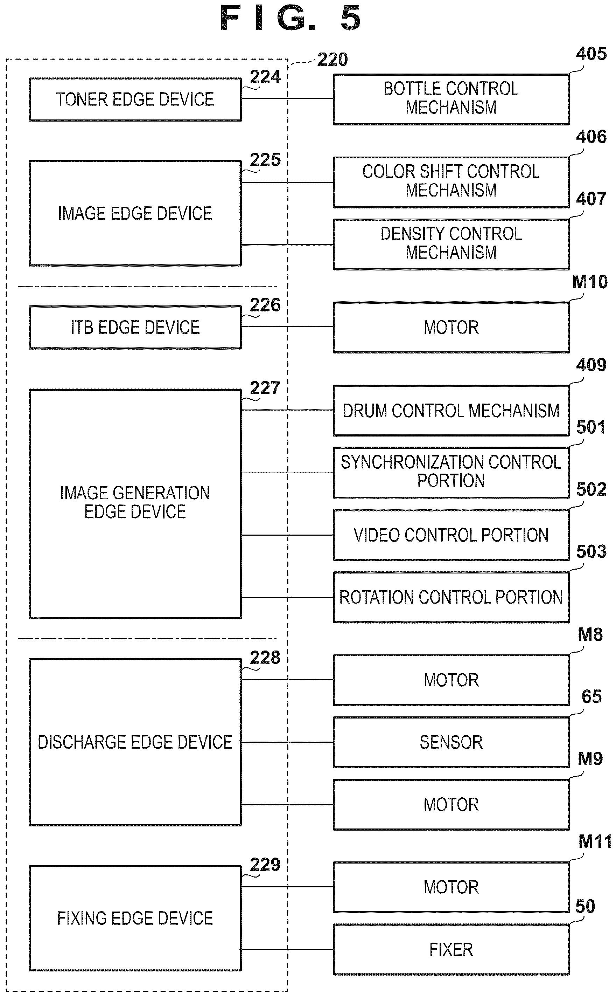

The second zone device 212 controls a toner edge device 224 and an image edge device 225. As illustrated in Fig. 5, the toner edge device 224 controls a bottle control mechanism 405. The bottle control mechanism 405 includes a motor that rotationally drives the toner bottles 90Y, 90M, 90C, and 90K. The image edge device 225 controls a color shift control mechanism 406 and a density control mechanism 407. The color shift control mechanism 406 controls the positions at which the toner images are formed relative to the recording material S. The density control mechanism 407 controls the density of the toner image.

Upon receiving an image generation command, the second zone device 212 transmits an image generation instruction to the image edge device 225. Upon receiving the image generation instruction, the image edge device 225 causes the color shift control mechanism 406 and the density control mechanism 407 to operate in accordance with the image generation instruction. Upon receiving a toner replenishment command, the second zone device 212 transmits a replenishment instruction to the toner edge device 224. Upon receiving the replenishment instruction, the toner edge device 224 drives the motor of the bottle control mechanism 405 to supply toner from the toner bottle 90Y or the like to the image forming portion PY or the like.

As illustrated in Fig. 2, the third zone device 213 controls an ITB edge device 226 and an image generation edge device 227. "ITB" is an acronym for "intermediate transfer belt". As illustrated in Fig. 5, the ITB edge device 226 controls a motor M10 and a transfer power supply that generates the primary transfer voltage. The motor M10 rotationally drives the driving roller 23 that drives the intermediate transfer belt 21. The image generation edge device 227 controls a drum control mechanism 409, a synchronization control portion 501, a video control portion 502, and a rotation control portion 503. The drum control mechanism 409 includes a motor that rotationally drives the photosensitive drums 1Y, 1M, 1C, and 1K. The synchronization control portion 501 is a circuit that generates various synchronization signals. The video control portion 502 supplies an image signal (a video signal) to the exposure device 3Y and the like. The rotation control portion 503 controls a motor that rotationally drives a rotating polygonal mirror included in the exposure device 3Y.

Upon receiving the image generation command, the third zone device 213 transmits the image generation instruction to the ITB edge device 226 and the image generation edge device 227. The image generation command may include image generation parameters. The rotational speed of the motor can be given as an example of an image generation parameter. The third zone device 213 computes control parameters such as the rotational speed of the motor M10 and the rotational speed of the motor of the drum control mechanism 409 on the basis of the image generation command. Upon receiving the image generation instruction, the ITB edge device 226 drives the motor M10 in accordance with the control parameters specified by the image generation instruction. In other words, the motor M10 rotates at a specified rotational speed. Upon receiving the image generation instruction, the image generation edge device 227 drives the drum control mechanism 409 according to the control parameters specified by the image generation instruction. The drum control mechanism 409 drives the motor at the specified rotational speed.

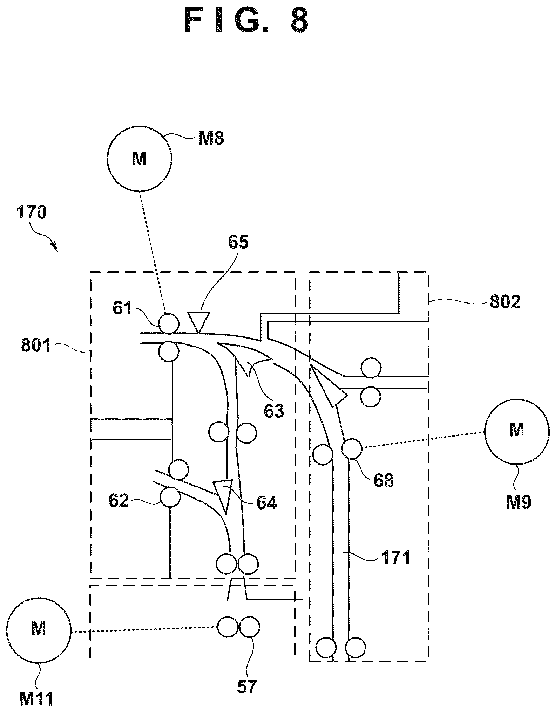

As illustrated in Fig. 2, the fourth zone device 214 controls a discharge edge device 228 and a fixing edge device 229. As illustrated in Fig. 3, a finisher edge device 234 that further controls an optional finisher may be connected at a level lower than the discharge edge device 228. As illustrated in Fig. 8, the discharge edge device 228 controls a motor M8, a motor M9, and the like. The motor M8 drives the discharge roller pair 61 involved in the processing for inverting the recording material S. The discharge edge device 228 controls a solenoid that drives flappers 63 and 64, and a sensor 65. The sensor 65 is a sheet sensor disposed between the flapper 63 and the discharge roller pair 61, and detects the passage of the leading end and the trailing end of the recording material S. The motor M9 drives a conveyance roller pair 68 to convey the recording material S, on the first surface of which an image has been formed, to the registration roller pair 42 again.

As illustrated in Fig. 5, the fixing edge device 229 controls the fixer 50 and a motor M11. As illustrated in Fig. 8, a conveyance roller pair 57 is disposed downstream from the fixer 50 in the conveyance direction of the recording material S. The motor M11 rotationally drives the conveyance roller pair 57 in addition to a heating roller and the pressure roller of the fixer 50. The fixer 50 further includes a heater, a temperature sensor, and the like. The temperature sensor detects or measures the temperature of the heater.

Upon receiving the fixing command, the fourth zone device 214 transmits a fixing instruction including the fixing temperature to the fixing edge device 229. The fixing command may include fixing parameters such as a fixing temperature (e.g., 180°C) and a rotational speed of the motor M11. The fourth zone device 214 may compute a power input to the heater and the rotational speed of the motor M11 on the basis of the fixing temperature. Here, when the heater is driven on and off, the on duty ratio of the heater may be computed.

Upon receiving the discharge command, the fourth zone device 214 transmits a discharge instruction to the discharge edge device 228. The discharge edge device 228 drives the motor M8 in accordance with the discharge instruction. The fourth zone device 214 may compute the rotational speed of the motor M8 on the basis of the discharge command and include the rotational speed in the discharge instruction. Upon receiving an inversion command, the fourth zone device 214 transmits an inversion instruction to the discharge edge device 228. The discharge edge device 228 controls the motors M8 and M9 in accordance with the inversion instruction.

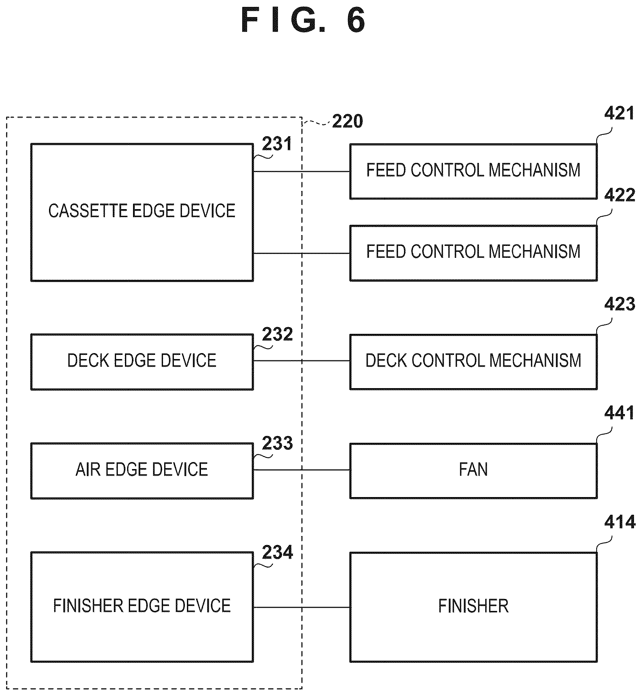

As illustrated in Fig. 6, the cassette edge device 231 controls feed control mechanisms 421 and 422. The feed control mechanism 421 controls feeding from the optional cassette 131. The feed control mechanism 422 controls feeding from the optional cassette 132. The deck edge device 232 controls a deck control mechanism 423 that handles feeding from the optional deck 180. The deck control mechanism 423 includes a motor that rotationally drives the feed roller 51 and the pull-out roller 52. The air edge device 233 controls a fan 441. The fan 441 blows air onto the plurality of recording materials S in order to separate one recording material S from the plurality of recording materials S. The finisher edge device 234 controls an optional finisher 414. The finisher 414 is a stapler, a binding apparatus, a sorting apparatus, a puncher, an image inspection apparatus, or the like.

### 1-3. Central Device

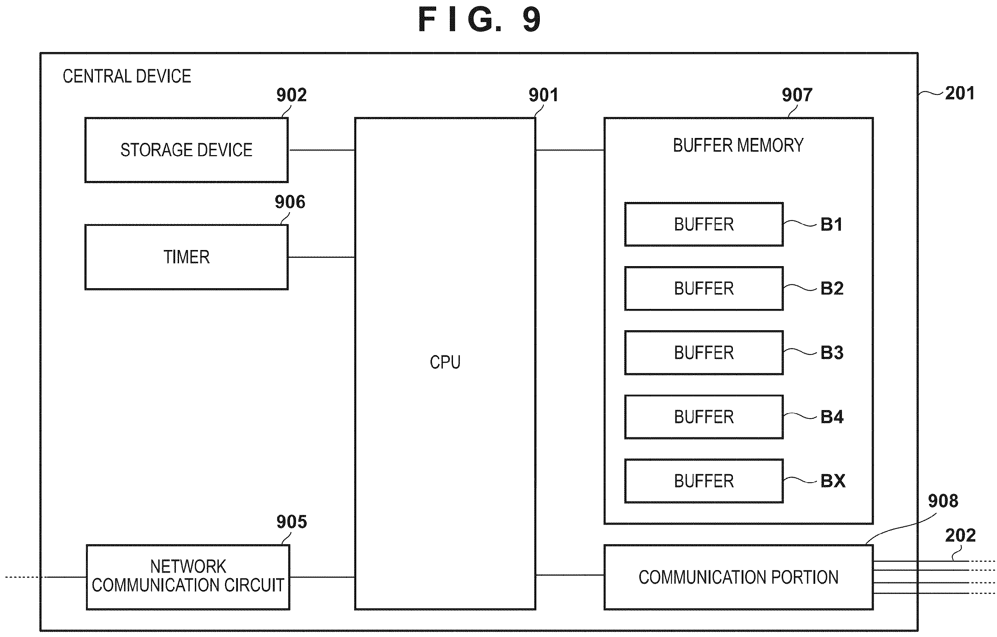

Fig. 9 illustrates the hardware of the central device 201. The central device 201 includes a CPU 901, a storage device 902, a network communication circuit 905, a timer 906, a buffer memory 907, and a communication portion 908, for example. The storage device 902 includes a read-only memory (ROM), a random access memory (RAM), a ferroelectric RAM (FeRAM), or the like. The CPU 901 is a central processing unit. The network communication circuit 905 communicates with a host computer over a local area network and receives print jobs. The timer 906 is a counting circuit that measures time. The buffer memory 907 is a RAM including a plurality of buffers B1 to B4 and BX. The communication portion 908 is a communication circuit including a receiver (receiving circuit) that receives signals from the zone devices 210 and a transmitter (a transmission circuit) that transmits signals to the zone devices 210.

The CPU 901 controls an image forming sequence, communication sequences with the zone devices 210, and the like according to control programs stored in a ROM region of the storage device 902. The CPU 901 transmits a load control request to each edge device 220 through the communication portion 908 according to the image forming sequence. The communication portion 908 receives response information transmitted from the edge device 220 via the zone device 210 and inputs the response information to the CPU 901. The CPU 901 executes the image forming sequence on the basis of the response information.

In addition to the control programs, the ROM region of the storage device 902 stores control tables and the like used in the image forming sequence or communication sequences. The ROM region is constituted by a non-volatile memory such as a NOR flash memory. A RAM region of the storage device 902 is used by the CPU 901 as a work memory for executing the image forming sequence or communication sequences. The RAM region is constituted by a volatile memory such as a static RAM (SRAM). An FeRAM region is a non-volatile memory that holds adjustment values determined when the image forming apparatus 10 is manufactured, transitions in input values, and durability information of components.

The CPU 901 determines the control timing of the image forming sequence or the communication sequence on the basis of time information obtained from the timer 906, and issues a predetermined communication request on the basis of the control timing.

The buffer memory 907 accumulates communication requests issued sequentially by the CPU 901 on the basis of the image forming sequence. The buffers B1 to B4 store information of a first communication type (e.g., control instructions). For example, the buffer B1 accumulates communication requests made to the first zone device 211. The communication requests to the first zone device 211 include communication requests to the edge devices 220 present under the first zone device 211. The buffer B2 accumulates communication requests to the second zone device 212. The communication requests to the second zone device 212 include communication requests to the edge devices 220 present under the second zone device 212. The buffer B3 accumulates communication requests to the third zone device 213. The communication requests to the third zone device 213 include communication requests to the edge devices 220 present under the third zone device 213. The buffer B4 accumulates communication requests to the fourth zone device 214. The communication requests to the fourth zone device 214 include communication requests to the edge devices 220 present under the fourth zone device 214.

However, the relationships between the buffers B1 to B4 and the zone devices 210 are merely one example. The buffers B1 to B4 may be directly associated with the edge devices 220. For example, if J edge devices 220 are present, J buffers are secured in the buffer memory 907.

The buffer BX stores information of a second communication type, to be shared with the plurality of zone devices 210 or the plurality of edge devices 220. The information of the second communication type includes timing information related to control timings that should be referenced by the plurality of zone devices 210 or the plurality of edge devices 220. Here, the timing information may include factor information about triggers of predetermined operations. The buffer BX may accumulate the information of a second communication type referred to only by a single edge device 220. In this case, the edge device 220 that provides the information of the second communication type may be different from the edge device 220 that uses the information of the second communication type.

The communication portion 908 is an N-channel communication circuit for the central device 201 to communicate with the zone devices 210. In the present embodiment, four zone devices 210 are present, and thus four channels are present as well (N = 4). The communication portion 908 communicates with the zone devices 210 using the communication protocol of the physical layer and the communication protocols of the logical layer. Four communication lines 202 support communication signals on four channels.

### 1-4. Zone Devices

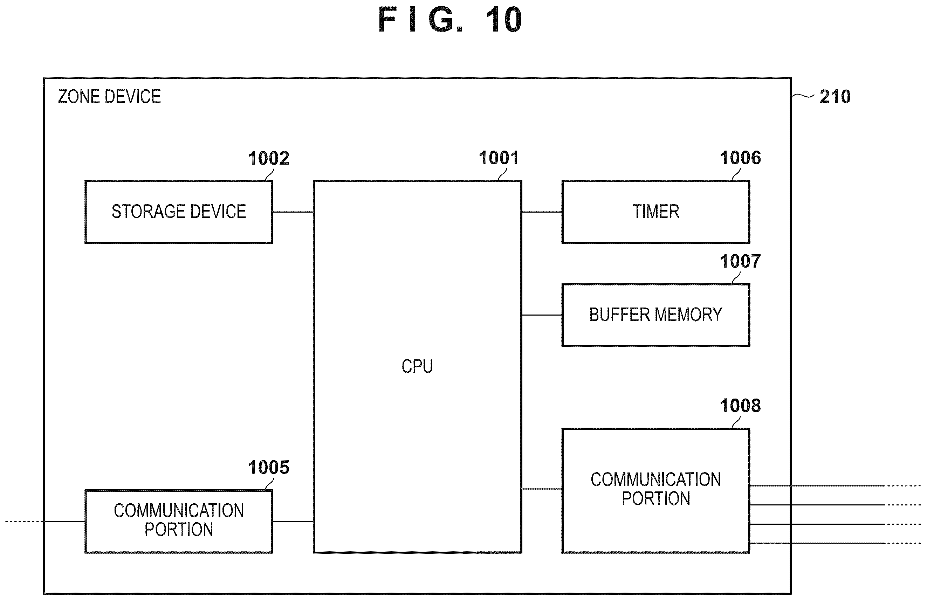

Fig. 10 illustrates the hardware of the zone device 210. The zone device 210 includes a CPU 1001, a storage device 1002, communication portions 1005 and 1008, a timer 1006, and a buffer memory 1007, for example. The storage device 1002 includes a ROM, a RAM, an FeRAM, and the like. The communication portion 1005 is a communication circuit including a receiver and a transmitter for communicating with the central device 201. The communication portion 1008 is a communication circuit including a receiver and a transmitter for communicating with the edge devices 220 under the zone device 210. The timer 1006 is a counting circuit that measures time. The buffer memory 1007 is a RAM used as a communication buffer.

The CPU 1001 transfers processing instructions for the edge devices 220, received from the central device 201 via the communication portion 1005, to the edge devices 220 via the communication portion 1008. Note that a single communication signal may include processing instructions for a plurality of edge devices 220. The CPU 1001 extracts individual processing instructions from the communication signals and transfers the processing instructions to the corresponding edge devices 220. The CPU 1001 transfers state information received from the edge devices 220 via the communication portion 1008 to the central device 201 via the communication portion 1005. The CPU 1001 merges individual items of the state information, transmitted from the plurality of edge devices 220, into a single communication signal, and transmits that communication signal to the central device 201. When processing these communication signals (communication data), the CPU 1001 uses the RAM region of the storage device 1002 as a work memory. Control programs and the like executed by the CPU 1001 are stored in the ROM region of the storage device 1002. Unique adjustment values for the edge devices 220 and durability information of components are stored in an FeRAM region of the storage device 1002.

The timer 1006 is a timer for the CPU 1001 to communicate with the edge devices 220 using the communication portion 1008, at predetermined timings and at predetermined intervals. The buffer memory 1007 temporarily holds responses to the communication requests from the central device 201 made by the CPU 1001, communication signals transmitted to the edge devices 220 via the communication portion 1008, or the like.

The communication portion 1008 is a communication circuit that uses M channels for communicating with M edge devices 220, for example. In the present embodiment, M is assumed to be 3. However, M may be any number greater than or equal to 1.

### 1-5. Edge Devices

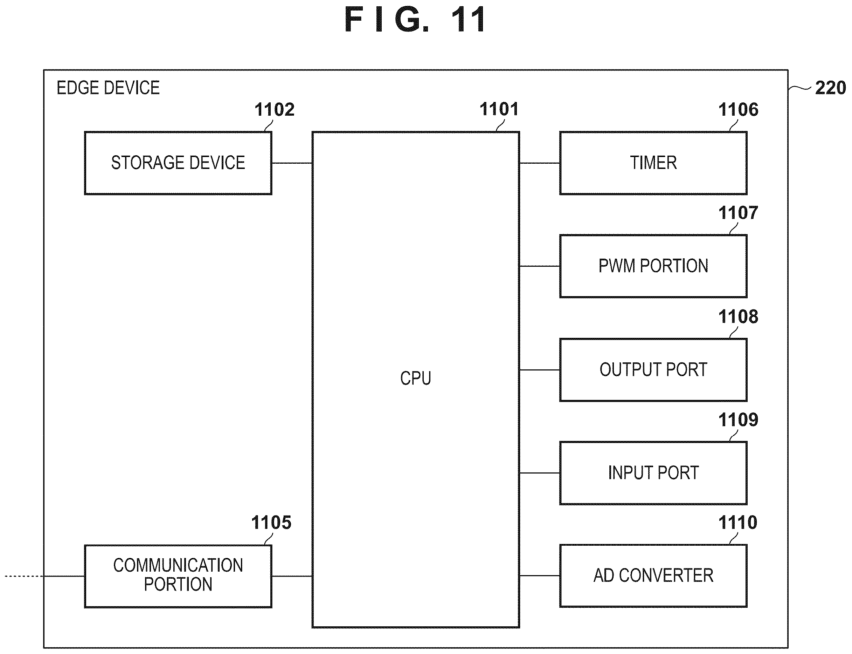

Fig. 11 illustrates the hardware of the edge device 220. The edge device 220 includes a CPU 1101, a storage device 1102, a communication portion 1105, a timer 1106, a PWM portion 1107, an output port 1108, an input port 1109, and an AD converter 1110, for example.

The CPU 1101 controls the edge device 220 and loads and sensors connected thereto by executing control programs stored in a ROM region of the storage device 1102. For example, the CPU 1101 receives the processing instructions from the zone device 210 via the communication portion 1105. The CPU 1101 drives the motors connected to the edge device 220, obtains values from the sensors connected to the edge device 220, and the like in accordance with the processing instructions.

A RAM region of the storage device 1102 temporarily stores information received from the zone devices 210, stores intermediate information required to drive the motors, stores values obtained from the sensors, and the like. The RAM region is also used as a work memory for the CPU 1101. The storage device 1102 may include an electrically erasable/programmable ROM (EEPROM). This holds individual correction values or the like of the components provided in the edge device 220.

The communication portion 1105 is a communication circuit including a receiver and a transmitter for communicating with the zone device 210. The communication portion 1105 receives instructions to the edge device 220, information obtainment requests, and the like. The communication speed at which the communication portion 1105 communicates with the zone device 210 is determined in advance.

The PWM portion 1107 is a signal generation circuit that generates a driving waveform, for a stepping motor or a DC brushless motor or the like. "PWM" is an acronym for "pulse width modulation". "DC" is an acronym for "direct current". The PWM portion 1107 outputs PWM signals that control the charging voltage, the developing voltage, the primary transfer voltage, and the secondary transfer voltage. The PWM portion 1107 sets or changes the frequency and duty ratio of the PWM signals on the basis of instructions from the central device 201.

The output port 1108 is an output circuit that outputs a binary output signal to a load or a drive circuit that drives the load in a sub-unit that includes the zone device 210 and the edge device 220. The output port 1108 outputs an enable signal for a motor driver IC. The output port 1108 outputs a power signal for turning the power supply of sensors on.

The input port 1109 is an input circuit that inputs a sensor detection signal and a door switch state signal in a sub-unit including the zone device 210 and the edge device 220. The sensor detection signal is a signal indicating whether the sheet sensor detects the recording material S, for example. The state signal is a signal indicating whether a maintenance door is open or closed.

The AD converter 1110 converts analog signals obtained from loads into digital signals within a sub-unit including the zone device 210 and the edge device 220. For example, the density of the image formed on the recording material S, the toner-carrier ratio in a two-component developing agent, the temperature of the fixer 50, the humidity in the vicinity of the developer 4, and the like are obtained as analog signals by sensors. For example, the AD converter 1110 converts the analog signals into 12-bit digital signals.

### 1-6. Examples Of Control Requiring High Responsiveness

### 1-6-1. Conveyance Control

Fig. 7 illustrates a conveyance mechanism 701, a feed mechanism 702, and a feed mechanism 703. The conveyance mechanism 701 conveys the recording material S using the preregistration roller pair 41 and the registration roller pair 42, corrects skew in the recording material S, and the like. The conveyance mechanism 701 includes the motors M1 and M2 and the sensors 46 and 47. The conveyance mechanism 701 is controlled by the feed edge device 221.

The feed mechanism 702 feeds the recording material S from the cassette 31 to the conveyance path 60. The feed mechanism 702 includes the feed roller 33, the pull-out roller 37, the motors M3 and M4, and the sensor 35. The feed mechanism 702 is controlled by the feed edge device 222.

The feed mechanism 703 feeds the recording material S from the multi-purpose tray 55 to the conveyance path 60. The feed mechanism 703 includes the feed roller 51, the pull-out roller 52, and the motor M7. The feed mechanism 703 is controlled by the feed edge device 223.

The feed edge device 222 rotates the feed roller 33 by driving the motor M3. As a result, the feed roller 33 conveys the recording material S held in the cassette 31 to the pull-out roller 37. The feed edge device 222 rotates the pull-out roller 37 by driving the motor M4 before the recording material S arrives at the pull-out roller 37. The pull-out roller 37 conveys the recording material S to the preregistration roller pair 41.

A sensor 35 disposed downstream from the pull-out roller 37 detects the recording material S. The feed edge device 222 reports the detection of the recording material S by the sensor 35 to the central device 201. The CPU 901 computes an expected timing at which the recording material S will pass the sensor 35 based on the speed at which the feed roller 33 and the pull-out roller 37 are rotated. The CPU 901 computes a delay time of the recording material S on the basis of the expected timing and the timing at which the sensor 35 actually detects the recording material S, and feeds back the delay time into the image forming sequence.

To provide more accurate feedback of the delay time of the recording material S, it is necessary for the delay time to be transmitted to the central device 201 as soon as possible. Furthermore, it is necessary for the central device 201 to promptly transmit the delay time to the edge devices 220, which need to refer to the delay time of the recording material S. In this manner, a certain responsiveness is required for the transmission of the result of the detection by the sensor 35.

The recording material S is fed to the conveyance mechanism 701 from the cassettes 31 and 32, the optional cassettes 131 and 132, the optional deck 180, or the multi-purpose tray 55. The conveyance mechanism 701 rotates the preregistration roller pair 41 by driving the motor M1, and conveys the recording material S to the registration roller pair 42 using the preregistration roller pair 41.

A leading end of the recording material S contacts a nip part of the registration roller pair 42, which is stopped. This forms a loop in the recording material S between the preregistration roller pair 41 and the registration roller pair 42. Skew in the recording material S is corrected as a result.

If the amount of the loop is insufficient, the entire leading end of the recording material S will not be in contact with the registration roller pair 42. This causes the accuracy of the skew correction to decrease. However, if the amount of the loop is too great, the trailing end of the recording material S will jump. This may cause a drop in the quality of the image transferred by the secondary transfer portion near the trailing end part of the recording material S.

To improve the accuracy of the skew correction, it is necessary for the CPU 901 to accurately detect the conveyance position of the recording material S using the sensor 46 and the sensor 47, and reflect that conveyance position in the conveyance control. Accordingly, a set responsiveness is required for the conveyance mechanism 701.

The feed mechanism 703 rotates the feed roller 51 and the pull-out roller 52 by driving the motor M7. The feed roller 51 conveys the recording material S set in the multi-purpose tray 55. The pull-out roller 52 conveys the recording material S to the registration roller pair 42.

The pull-out roller 52 is subjected to control similar to that of the preregistration roller pair 41, and causes the recording material S to contact the registration roller pair 42. Skew in the recording material S fed from the multi-purpose tray 55 is corrected as a result.

No sensors are disposed in the feed mechanism 703. Responsiveness is therefore not required for the feed mechanism 703.

The feed edge devices 221 and 222 that control the feed mechanism 702 and the conveyance mechanism 701 for the cassette 31 require a set responsiveness. Accordingly, it is necessary for the feed edge devices 221 and 222 and the first zone device 211 to be capable of communicating at high speed. The feed mechanism 703 for the multi-purpose tray 55 does not require high responsiveness. It is therefore not necessary for the feed edge device 223 and the first zone device 211 to be capable of high-speed communication. 1-6-2. Discharge Control

Fig. 8 illustrates a discharge mechanism 801 and an inversion mechanism 802 included in the discharge unit 170. The discharge mechanism 801 is disposed downstream from the fixer 50. The flapper 64 of the discharge mechanism 801 guides the recording material S to the discharge tray 82 or the discharge tray 81.

When a print job involves single-sided printing, the motor M8 rotates the discharge roller pair 61 and the discharge roller pair 62 forward. The discharge roller pair 61 discharges the recording material S to the discharge tray 81. The discharge roller pair 62 discharges the recording material S to the discharge tray 82.

When the print job involves double-sided printing, the flapper 64 guides the recording material S to the discharge roller pair 61. The motor M8 and the discharge roller pair 61 start decelerating after a predetermined length of time has passed following the leading end of the recording material S passing the sensor 65. It is necessary to stop the discharge roller pair 61 before the trailing end of the recording material S exits the discharge roller pair 61 after passing the sensor 65. This is because if the trailing end of the recording material S exits the discharge roller pair 61, the discharge roller pair 61 becomes unable to invert the recording material S. The discharge edge device 228 reports the detection result from the sensor 65 to the central device 201 via the fourth zone device 214. The central device 201 transmits a switching instruction to switch the direction of rotation of the motor M8 to the discharge edge device 228 on the basis of the detection result from the sensor 65.

In this manner, in control for inverting the recording material S when double-sided printing is performed, it is necessary to report the leading end and the trailing end of the recording material S passing the sensor 65 to the central device 201 as soon as possible. As such, it is necessary for changes in the signal from the sensor 65 to be sent at a high communication speed.

### 1-6-3. Image Generation Control

As illustrated in Fig. 5, the image generation edge device 227 controls the drum control mechanism 409. As illustrated in Fig. 11, the drum control mechanism 409 uses the PWM portion 1107, the AD converter 1110, and the input port 1109 provided in the image generation edge device 227. The image generation edge device 227 receives control instructions for controlling the photosensitive drums 1Y, 1M, 1C, and 1K from the central device 201 and passes the control instructions to the drum control mechanism 409. The control instructions include target speed setting values for the motors that rotationally drive the photosensitive drums 1Y, 1M, 1C, and 1K, respectively. The rotational speed of each motor is controlled by a PWM signal output from the PWM portion 1107. The rotation and stopping of the motor are controlled by whether the PWM portion 1107 outputs or stops the PWM signal. An FG signal output by the motor is input to the input port 1109. Through this, too, feedback control is performed to keep the rotational speed of the motor at the target speed.

The drum control mechanism 409 receives the control instructions for controlling the chargers 2Y, 2M, 2C, and 2K from the central device 201 via the image generation edge device 227. The control instruction includes a target value for the charging voltage. The charging voltage is controlled by a duty ratio of the PWM signal supplied to the power supply from the PWM portion 1107. The AD converter 1110 samples the charging voltage. The drum control mechanism 409 keeps the charging voltage at the target voltage on the basis of a sampling value.

The drum control mechanism 409 receives control instructions for controlling the developers 4Y, 4M, 4C, and 4K from the central device 201. The control instructions include a target value for the developing voltage. The developing voltage is controlled by a duty ratio of the PWM signal supplied to the power supply from the PWM portion 1107. The AD converter 1110 samples the developing voltage. The drum control mechanism 409 keeps the developing voltage at the target voltage on the basis of a sampling value.

The synchronization control portion 501, the video control portion 502, and the rotation control portion 503 illustrated in Fig. 5 are called an "exposure control portion". The rotation control portion 503 controls the motors to rotate a rotating polygonal mirror provided in each of the exposure devices 3Y, 3M, 3C, and 3K at a constant speed.

The video control portion 502 converts image information input as a print job into a video signal. The video control portion 502 furthermore outputs the video signal to the exposure devices 3Y, 3M, 3C, and 3K one line at a time.

The synchronization control portion 501 controls an exposure start timing (a write timing) of the exposure devices 3Y, 3M, 3C, and 3K on a page-by-page basis. The exposure start timing is also the timing at which the video signal is output on a line-by-line basis. The exposure start timings of the exposure devices 3Y, 3M, 3C, and 3K are shifted from each other by a predetermined interval. The predetermined interval is proportional to the conveyance distance of the toner images between the photosensitive drums 1Y, 1M, 1C, and 1K. It is necessary to accurately control the exposure start timings in the exposure devices 3Y, 3M, 3C, and 3K to accurately superimpose the toner images of the four colors. The synchronization control portion 501 outputs an image leading end signal to the video control portion 502 for each of the exposure devices 3Y, 3M, 3C, and 3K. The video control portion 502 begins outputting the video signal to the exposure devices 3Y, 3M, 3C, and 3K on the basis of the timing of the image leading end signal.

Here, it is necessary for the timing at which the toner image reaches the secondary transfer portion to coincide with the timing at which the recording material S reaches the secondary transfer portion. The exposure start timing of the exposure device 3K, which is closest to the secondary transfer inner roller 22, is used to align the position of the leading end of the recording material S that has passed through the registration roller pair 42 with the position of the toner image.

It is necessary for the central device 201 to obtain the timing at which the synchronization control portion 501 outputs the image leading end signal to the exposure device 3K on a page-by-page basis without delay. After a set length of time has elapsed following the output timing of the image leading end signal, the central device 201 simultaneously turns on the motor M2 that drives the registration roller pair 42 and the motor M4 that drives the pull-out roller 37. The registration roller pair 42 and the pull-out roller 37 are rollers that simultaneously nip the recording material S. Accordingly, it is necessary for the image leading end signal and an on signal based thereon to be transmitted through lowlatency communication.

### 1-7. Communication Control

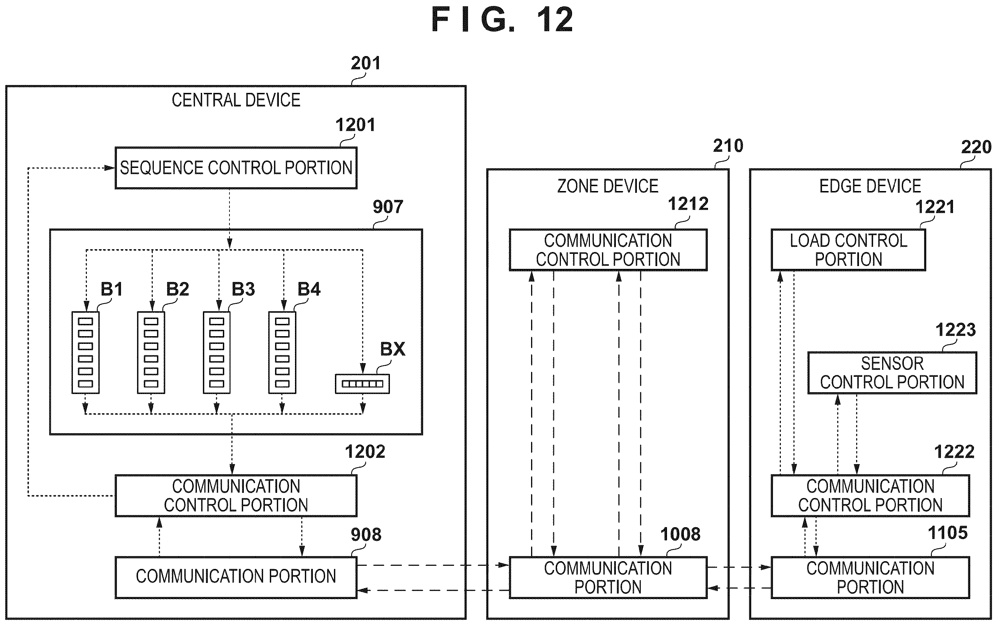

Fig. 12 illustrates a method through which the central device 201 and the edge device 220 communicate via the zone device 210. The CPU 901 includes a sequence control portion 1201 that controls the image forming sequence and a communication control portion 1202 that communicates with the edge device 220 via the zone device 210. These are functions implemented by the CPU 901 executing control programs. The sequence control portion 1201 and the communication control portion 1202 may also be called "tasks".

The CPU 1001 of the zone device 210 includes a communication control portion 1212. The communication control portion 1212 relays communication signals between the central device 201 and the edge device 220.

The CPU 1101 of the edge device 220 includes a load control portion 1221, a sensor control portion 1223, and a communication control portion 1222. The load control portion 1221 controls a load (e.g., a motor, a solenoid, a charging power supply, a developing power supply, or a transfer power supply) through the PWM portion 1107 and the output port 1108 in accordance with control instructions transmitted from the central device 201. The sensor control portion 1223 obtains detection signals from sheet sensors, the temperature sensor, or the like through the input port 1109 and the AD converter 1110, and transmits the detection signal to the central device 201. The communication control portion 1222 communicates with the central device 201 via the zone device 210. The communication control portion 1222 extracts control instructions and timing information from the communication signal received from the central device 201, and passes the control instructions and timing information to the load control portion 1221 and the sensor control portion 1223. The load control portion 1221 executes operations specified by the control instructions at a timing based on the timing information. The timing based on the timing information is a time at which the timing information has changed, or a time following a predetermined length of time from the time at which the timing information changed. The sensor control portion 1223 causes the sensors to operate in accordance with control instructions (state obtainment requests), obtains detection signals, and reports the detection signals to the central device 201.

The communication control portion 1222 generates a response packet corresponding to the communication request and transmits the response packet to the central device 201 through the communication portion 1105. The response packet includes an execution result of the communication request, a detection signal from the sensor, or the like. The communication portion 1008 and the communication control portion 1212 of the zone device 210 relay response packet to the central device 201.

Upon receiving the response packet, the communication portion 908 and the communication control portion 1202 of the central device 201 pass the response packet to the sequence control portion 1201. The sequence control portion 1201 applies the content of the response packet in the next operation. When a response packet is received in response to the state obtainment request, the sequence control portion 1201 extracts state information (a detection signal) from the response packet, and updates the state information in the buffer BX.

Upon receiving the response packet, the communication control portion 1202 determines that a single transaction is complete. If a communication request is still present in the buffer memory 907, the communication control portion 1202 transmits the next communication packet.

As illustrated in Fig. 12, the buffer memory 907 includes buffers B1 to B4 for each of the plurality of edge devices 220. For example, the buffer B1 accumulates communication requests made to a first edge device. The buffer B2 accumulates communication requests made to a second edge device. The buffer B3 accumulates communication requests made to a third edge device. The buffer B4 accumulates communication requests made to a fourth edge device. In this manner, a buffer Bi accumulates communication requests made to an i-th edge device. i is an integer greater than or equal to 1. The buffer BX accumulates common timing information for a plurality of edge devices.

In response to the start of a print job, the sequence control portion 1201 accumulates communication requests made to the edge device 220 in the buffer memory 907 in order to issue a drive instruction to the motor and a detection instruction to the sensor. Communication requests have various communication types. A request for setting the rotational speed, acceleration, deceleration, a current instruction value, or the like for an individual motor will be called a "setting request". A starting instruction, a speed change instruction, a stopping instruction, and the like for a motor are called "operation start requests". A request for obtaining the present speed or state of the motor and the present value detected by the sensor is called a "state obtainment request".

The communication control portion 1202 retrieves the communication requests from the buffer memory 907 in accordance with the order in which the communication requests have been accumulated in the buffer memory 907, and transmits the communication requests to the destinations. Some time is required from the timing at which the sequence control portion 1201 issues a communication request to when the communication request is actually reflected in the operation of the motor or the like. This is called a "delay time". The delay time increases with the number of communication requests accumulated in the buffer memory 907.

The buffer BX accumulates timing information (trigger information). The timing information is information indicating, for example, whether a trigger (event) acting as a condition for the edge device 220 to start operating is occurring. The central device 201 periodically obtains the newest timing information from the edge device 220, and stores the timing information in the buffer BX. The buffer BX stores a plurality of different types of timing information in parallel. Here, the leading end of the recording material S arriving at the sensor 47 is a trigger for starting acceleration of the motor M1 (a preregistration sensor trigger). The leading end of the recording material S arriving at the sensor 46 is a trigger for starting deceleration of the motor M1 (a registration sensor trigger). The start of the K (black) exposure among the YMCK colors is a trigger for shifting the speed of the motor M1 (a shift trigger). It is assumed here that the speed of the motor M1 is changed to a predetermined speed after a predetermined length of time has passed following the start of exposure. The predetermined speed is the speed of the motor M10 that drives the intermediate transfer belt 21. The trailing end of the recording material S clearing the sensor 65 is a trigger for starting deceleration of the motor M8 (a deceleration trigger).

The communication control portion 1202 reads out the communication requests accumulated in the i-th buffer Bi among the buffers B1 to B4, and assembles a communication signal with an i-th edge device 220 as the destination. Furthermore, the communication control portion 1202 transmits the communication signal to the i-th edge device 220 via the communication portion 908 and the zone device 210.

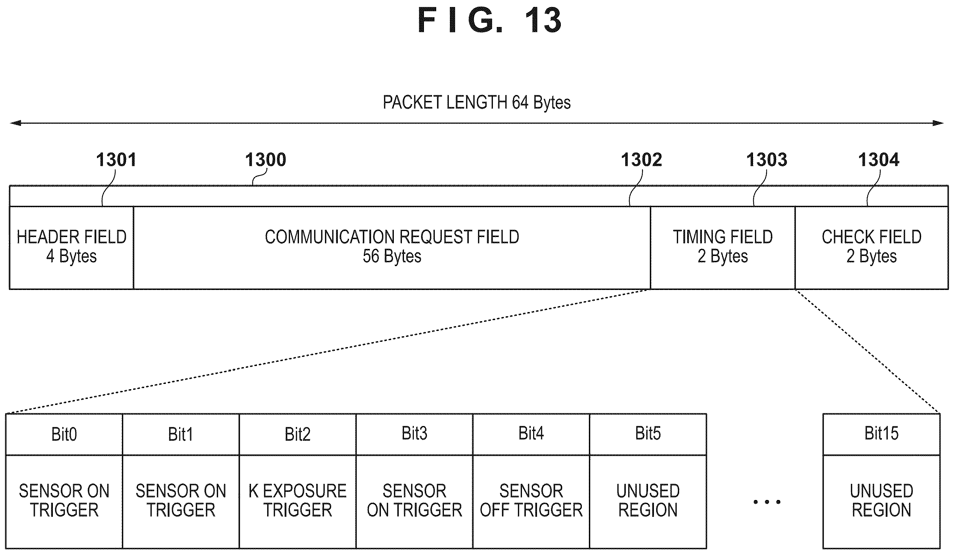

Fig. 13 illustrates the format of the communication signal (communication packet). A communication packet 1300 is a packet having a fixed size (e.g., 64 bytes). The communication packet 1300 is constituted by a header field 1301, a communication request field 1302, a timing field 1303, and a check field 1304. The size of the header field 1301 is 4 bytes. The header field 1301 includes the destination or the like of the communication packet 1300. The size of the communication request field 1302 is 56 bytes. The communication request field 1302 includes the communication request read out from the buffer Bi. The size of the timing field 1303 is 2 bytes. The timing field 1303 includes the timing information read out from the buffer BX. The check field 1304 is 2 bytes. The check field 1304 includes a check code (e.g., a cyclic redundancy check code) for detecting an error or the like. The sizes of the fields are examples.

The total size of the communication requests stored in the buffer B1 may be greater than 56 bytes. In this case, the communication control portion 1202 reads out 56 bytes of information from the buffer Bi and stores that information in the communication request field 1302. Then, the communication control portion 1202 arranges the timing information read out from the buffer BX in the timing field 1303. The remainder of the communication requests stored in the buffer B1, which exceed 56 bytes, is transmitted in the next communication signal. In this manner, when many communication requests are present, the timing information is inserted as an interrupt between communication requests.

The timing field 1303 is arranged in the communication packet 1300 even when no event acting as a trigger has occurred. In this case, information indicating that no trigger has occurred is stored in the timing field 1303.

The timing field 1303 is constituted by 16 bits. A bit 0 holds ON trigger information of the sensor 47 (a sensor ON trigger). In other words, a value of 1 is stored in bit 0 while the recording material S is passing the sensor 47. A value of 0 is stored in bit 0 while the recording material S is not passing the sensor 47.

A bit 1 holds ON trigger information of the sensor 46 (a sensor ON trigger). A value of 1 is stored in bit 1 while the recording material S is passing the sensor 46. A value of 0 is stored in bit 1 while the recording material S is not passing the sensor 46.

A bit 2 holds information indicating the timing of the start of the exposure by the exposure device 3K (a K exposure trigger). A bit 3 holds ON trigger information of the sensor 65 (a sensor ON trigger). A value of 1 is stored in bit 0 while the recording material S is passing the sensor 65. A value of 0 is stored in bit 0 while the recording material S is not passing the sensor 65. A bit 4 holds OFF trigger information of the sensor 65 (a sensor OFF trigger). Bits 5 to 15 are reserved bits. The timing information is also arranged in bits 5 to 15 in accordance with the configuration of the image forming apparatus 10.

### 1-8. Flowchart

### 1-8-1. Central Device

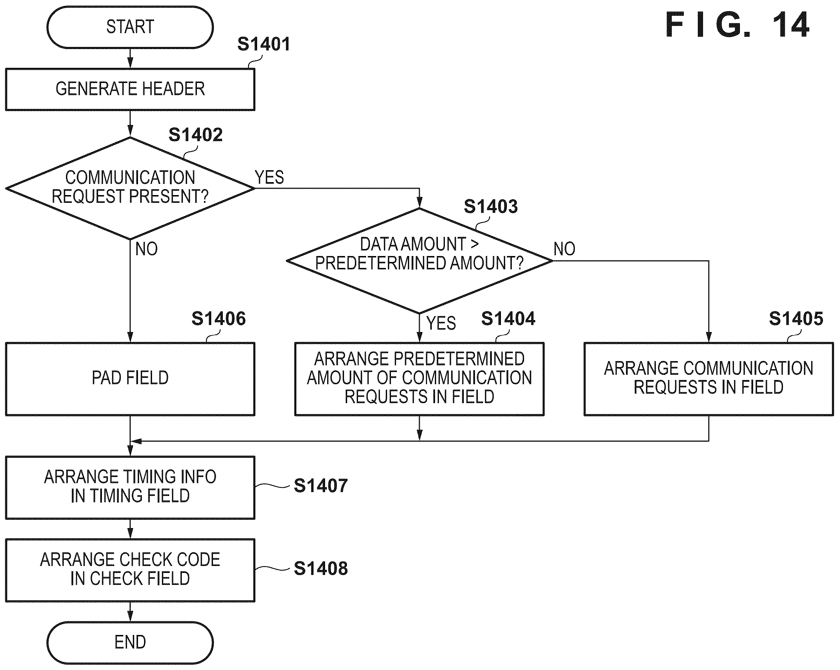

Fig. 14 illustrates a communication method executed by the CPU 901 (the communication control portion 1202). The following communication method is executed for each edge device 220.

In step S1401, the CPU 901 generates a header including destination information, which includes the identification information of the edge device 220 serving as a communication destination. The header is stored in the header field 1301.

In step S1402, the CPU 901 determines whether a communication request is present in the buffer Bi, among the buffers B1 to B4, that corresponds to the i-th edge device 220 that is the communication destination. If a communication request is present, the CPU 901 moves the sequence from step S1402 to step S1403.

In step S1403, the CPU 901 obtains a data amount of the communication requests accumulated in the buffer Bi and determines whether the data amount exceeds a predetermined amount. The predetermined amount is the size of the communication request field 1302 (e.g., 56 bytes). If the data amount exceeds the predetermined amount, the CPU 901 moves the sequence from step S1403 to step S1404.

In step S1404, the CPU 901 retrieves the predetermined amount of communication requests from the buffer Bi and arranges those communication requests in the communication request field 1302. The communication requests retrieved from the buffer Bi are deleted from the buffer Bi. The buffers B1 to B4 are therefore first-in-first-out (FIFO) type buffers. The CPU 901 then moves the sequence from step S1404 to step S1407.

However, if the data amount does not exceed the predetermined amount, the CPU 901 moves the sequence from step S1403 to step S1405. In step S1405, the CPU 901 retrieves all the communication requests from the buffer Bi and arranges those communication requests in the communication request field 1302. Note that the communication request field 1302 may be padded if all the communication requests come to less than the predetermined amount. "Padding" refers to embedding invalid data (padding bits) in the field. The CPU 901 then moves the sequence from step S1405 to step S1407.

When no communication request is determined to be present in step S1402, the CPU 901 moves the sequence from step S1402 to step S1406.

In step S1406, the CPU 901 pads the communication request field 1302. As a result, invalid data is arranged in the communication request field 1302. The CPU 901 then moves the sequence from step S1406 to step S1407.

In step S1407, the CPU 901 reads out the timing information from the buffer BX, and arranges the timing information in the timing field 1303. The buffer BX always holds the timing information. However, the timing information is updated as needed in response to the state obtainment request.

In step S1408, the CPU 901 generates the check code and arranges the check code in the check field 1304. The communication portion 908 transmits the completed communication signal over the channel associated with the i-th edge device 220.

### 1-8-2. Edge Devices

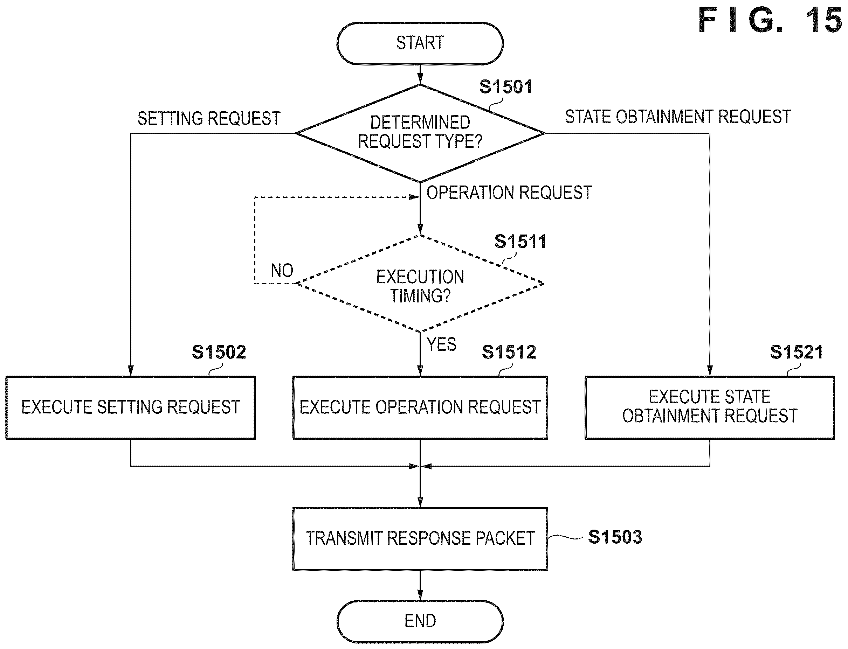

Fig. 15 illustrates a control method executed by the CPU 1101. The following processing is executed when the CPU 1101 (the communication control portion 1222) receives a communication packet through the communication portion 1105.

In step S1501, the CPU 1101 extracts the communication request from the communication request field 1302 of the communication packet, and determines the request type of the communication request. Here, the communication request is classified as a setting request, an operation request, or a state obtainment request. If the communication request is a setting request, the CPU 1101 moves the sequence from step S1501 to step S1502. If the communication request is an operation request, the CPU 1101 moves the sequence from step S1501 to step S1511. If the communication request is a state obtainment request, the CPU 1101 moves the sequence from step S1501 to step S1521.

### • Setting Request

In step S1502, the CPU 1101 (the load control portion 1221) executes the setting request. For example, the load control portion 1221 sets the rotational speed, acceleration, deceleration, lower limit speed, and the like for the motor corresponding to the setting request on the basis of the setting request. The setting request may also be a request to set a drive current for the motor. In this case, the load control portion 1221 sets the duty ratio of the PWM signal generated by the PWM portion 1107 on the basis of the setting request. Note that the PWM signal is supplied to the motor drive circuit after being smoothed by a filter. This controls the drive current supplied to the motor from the motor drive circuit. The CPU 1101 then moves the sequence from step S1502 to step S1503. In step S1503, the CPU 1101 transmits a response packet indicating whether the setting request has been executed successfully to the central device 201.

### • Operation Request

In step S1511, the CPU 1101 (the load control portion 1221) waits for an execution timing corresponding to the operation request. The execution timing is, for example, that specific timing information stored in the timing field 1303 has changed. Step S1511 is skipped if the operation request is a request that should be executed immediately. When the execution timing arrives, the CPU 1101 moves the sequence from step S1511 to step S1512.

In step S1512, the CPU 1101 (the load control portion 1221) executes the operation request. For example, the load control portion 1221 turns the motor on, changes the rotational speed, turns the motor off, or the like in accordance with the operation request. For example, the load control portion 1221 changes the frequency of the PWM signal through the PWM portion 1107 every control period that is based on the timer 1106. The rate of change of the frequency is proportional to an acceleration set by the setting request. Furthermore, the load control portion 1221 keeps the rotational speed of the motor at the target speed set by the setting request. This causes the motor to transition from an accelerating state to a constant speed state. There are also cases where the operation request is a request to turn the motor off. The load control portion 1221 changes the frequency of the PWM signal through the PWM portion 1107 every control period that is based on the timer 1106. The rate of change of the frequency is proportional to a deceleration set by the setting request. Furthermore, when the rotational speed of the motor falls below the lower limit speed set in accordance with the setting request, the load control portion 1221 causes the PWM portion 1107 to stop outputting the PWM signal. This causes the motor to stop. The CPU 1101 then moves the sequence from step S1512 to step S1503. In step S1503, the CPU 1101 transmits a response packet indicating whether the operation request has been executed successfully to the central device 201.

### • State Obtainment Request

In step S1521, the CPU 1101 (the sensor control portion 1223) executes the state obtainment request. When the state obtainment request is a request to obtain the state of the motor, the sensor control portion 1223 obtains, through the load control portion 1221, the rotational speed and the state of the motor that is the target of the state obtainment request. The state of the motor is "stopped", "accelerating", "rotating at constant speed", "decelerating", or the like. There are also cases where the state obtainment request is a request for obtaining the present value of a specific sensor. The sensor control portion 1223 obtains the present value from the input port 1109 that is the target of the state obtainment request. In this case, the present value is a binary value. The present value of an analog sensor is obtained through the AD converter 1110. The present value is expressed in 12 bits, for example. The CPU 1101 then moves the sequence from step S1521 to step S1503. In step S1503, the CPU 1101 transmits a response packet including the obtained state information (the present value) to the central device 201.

### • Example of Executing Operation Request on Basis of Timing Information

A plurality of operation requests are present in the image forming sequence. The plurality of operation requests include an operation request to be executed at a timing (under conditions) that is based on specific timing information. The load control portion 1221 extracts the specific timing information from the timing field 1303. If the timing information indicates that a trigger has occurred, the load control portion 1221 executes a predetermined operation.

For example, bit 0 may indicate that a trigger based on the sensor 47 is occurring. In this case, the motor M1 connected to the feed edge device 221 and the motors M3 and M4 connected to the feed edge device 222 simultaneously start accelerating at the same timing. This is because the pull-out roller 37, which is rotationally driven by the motor M4, and the preregistration roller pair 41, which is rotationally driven by the motor M1, simultaneously nip and convey the same recording material S. Sagging or tension in the recording material S is less likely to occur as a result. Loss of synchronization in the motors M1, M3, and M4 is also suppressed.

Bit 1 may indicate that a trigger based on the sensor 46 is occurring. In this case, both the motor M1 connected to the feed edge device 221 and the motor M4 connected to the feed edge device 222 start decelerating at the same timing. As a result, the preregistration roller pair 41 stops the recording material S such that a loop can be formed in the recording material S. This is because the preregistration roller pair 41, which is rotationally driven by the motor M1, and the pull-out roller 37, which is rotationally driven by the motor M4, simultaneously nip and convey the same recording material S. Skew in the recording material S is appropriately corrected through this control. In other words, because the deceleration timings of the motors M1 and M4 match, an appropriate loop is formed and the skew in the recording material S is corrected.

A bit 2, which is based on the exposure device 3K, may indicate the occurrence of a trigger. In this case, the motors M2 and M1 connected to the feed edge device 221 and the motor M4 connected to the feed edge device 222 are turned on simultaneously. The motors M2, M1, and M4 are accelerated such that the speeds thereof reach the speed of the motor M10 driving the intermediate transfer belt 21. This is because the registration roller pair 42, the preregistration roller pair 41, and the pull-out roller 37 are simultaneously nipping and conveying the same recording material S.

This control makes it less likely that buckling or tension will occur in the recording material S. Furthermore, the toner image on the intermediate transfer belt 21 is accurately transferred to a predetermined position on the recording material S. The conveyance speed of the leading end of the recording material S is stable, which improves the quality of the image formed near the leading end of the recording material S.

A bit 3, which is based on the sensor 65, may indicate the occurrence of a trigger. In this case, the discharge edge device 228 executes deceleration of the motor M8 after a predetermined length of time has passed following the leading end of the recording material S reaching the sensor 65.

A bit 4, which is based on the sensor 65, may indicate the occurrence of a trigger (that the trailing end of the recording materials S has exited the sensor 65). The discharge edge device 228 executes control for stopping the motor M8, and stops the recording material S before the trailing end of the recording material S leaves the discharge roller pair 61. The discharge edge device 228 then switches the orientation of the flapper 63, rotates the motor M8 in reverse, and sends the recording material S into a conveyance path 71. As a result, an image is also formed on the second surface of the recording material S for which an image has been formed on the first surface.

Incidentally, at the point in time when the timing of the deceleration of the motor M8 is determined, part of the recording material S may be nipped by the conveyance roller pair 57 driven by the motor M11 connected to the fixing edge device 229. It is therefore necessary for the discharge edge device 228 and the fixing edge device 229 to coordinate with each other to control the conveyance of the recording material S (coordinated deceleration control). The sensor 65 is connected to the discharge edge device 228, and the fixing edge device 229 therefore cannot obtain the state of the detection by the sensor 65. Accordingly, the fixing edge device 229 refers to the timing information of the sensor 65 communicated by the communication packet 1300 from the central device 201. This makes it possible for the fixing edge device 229 to coordinate the motor M11 with the motor M8 of the discharge edge device 228 on the basis of the timing information of the sensor 65. As a result, the recording material S can be discharged and inverted at a higher conveyance speed.

A timing field in which the timing information is stored is provided in each communication packet 1300 transmitted from the central device 201 to the edge device 220. In other words, each edge device 220 can obtain the newest timing information each time the communication packet 1300 is received. Even if a large amount of communication requests have accumulated in the buffer memory 907, the timing information can be transmitted as an interrupt during the transmission of the large amount of communication requests. For example, the timing information is always transmitted after a predetermined amount of communication requests is transmitted. The remaining communication requests are then transmitted in the next communication packet 1300. This makes it less likely that latency will arise in the transmission of the timing information.

In this manner, in the first embodiment, the timing information is transmitted in the communication packet 1300, which reduces the number of dedicated signal lines needed to transmit the timing information. Although the number of signal lines is reduced, delay in the operations is also less likely to occur. This makes it possible to both maintain the quality of images and reduce costs.

### 1-9. Conclusion

The image forming engine 150 is an example of an image forming unit configured to form an image on a sheet (e.g., the recording material S). The feed roller 33, the preregistration roller pair 41, and the like are examples of a plurality of conveyance units, each configured to convey the sheet to the image forming unit. The conveyance roller pair 57, the discharge roller pair 61, and the like are examples of a plurality of conveyance units, each configured to convey the sheet that has passed through the image forming unit. The central device 201 is an example of a main control unit configured to control the image forming unit and the plurality of conveyance units in accordance with a conveyance position of the sheet. The zone device 210 and the edge device 220 are examples of a plurality of sub control units, each configured to control the image forming unit or one of the plurality of conveyance units on the basis of a communication signal received from the main control unit. While information of a first communication type for a specific sub control unit, among the plurality of sub control units, is transmitted over a communication line corresponding to the specific sub control unit, the main control unit inserts transmission of information of a second communication type as an interrupt. In this manner, the information of the second communication type is transmitted over the communication line, and thus a dedicated signal line for transmitting the information of the second communication type is unnecessary. The number of signal lines in the image forming apparatus 10 is therefore reduced.

The main control unit is configured to insert the transmission of the information of the second communication type as an interrupt when a part of the information of the first communication type having a predetermined size is transmitted. The main control unit is configured to then resume transmitting a remaining part of the information of the first communication type for the specific sub control unit. Accordingly, even if a large amount of the information of the first communication type is present, the transmission of the information of the second communication type is less likely to be delayed.

The communication signal transmitted to each of the plurality of sub control units includes a first region (e.g., the communication request field 1302) and a second region (e.g., the timing field 1303). The first region is a region, of the predetermined size, storing the information of the first communication type for the specific sub control unit, the specific sub control unit being a destination, among the plurality of sub control units, of the communication signal. The second region is a region storing the information of a second communication type to be shared by the plurality of sub control units. In this manner, the first region is of a fixed size, and thus a large amount of the information of the first communication type is transmitted in a divided manner. This contributes to transmitting the information of the second communication type without delay.

The main control unit includes a plurality of first buffers (e.g., the buffers B1 to B4) and a second buffer (e.g., the buffer BX). Each of the plurality of first buffers is provided for a corresponding one of the plurality of sub control units, and is configured to accumulate the information of the first communication type. The second buffer is configured to accumulate the information of the second communication type. The main control unit is configured to read out a part of the information of the first communication type having the predetermined size one part at a time from the plurality of first buffers and store each part in the first region. The main control unit is configured to read out the information of the second communication type from the second buffer and store the information of the second communication type in the second region. By using the buffer in this manner, even if a large amount of the information of the first communication type is present, the information of the first communication type is transmitted in accordance with the order in which the information was issued.

As illustrated in Fig. 13, a size of the first region and a size of the second region are each a fixed size. However, these sizes may be variable.

The communication portion 1105 is an example of a receiving unit configured to receive the communication signal. The CPU 1101 and the communication control portion 1222 function as an extraction unit configured to extract the information of the first communication type from the first region of the communication signal, and extract the information of the second communication type from the second region of the communication signal. The CPU 1101 and the load control portion 1221 function as an execution unit configured to execute an operation according to the information of the second communication type at a timing according to the information of the second communication type.

The information of the second communication type may be factor information serving as a trigger for a specific operation. The information of the first communication type includes content of an operation to be executed by the specific sub control unit or content of information to be reported to the main control unit by the specific sub control unit. The communication signal includes destination information indicating a destination of the communication signal (e.g., the header field 1301). The sensors 35, 46, and 47 are examples of a detection unit disposed upstream from the image forming unit in a conveyance direction of the sheet. The information of the second communication type includes information indicating whether a leading end of the sheet has been detected by the detection unit. The information of the second communication type may include information indicating a timing of writing an image of a specific color by the image forming unit.

The plurality of conveyance units include a first conveyance unit (e.g., the registration roller pair 42), and a second conveyance unit (e.g., the preregistration roller pair 41) configured to form a loop in the sheet and correct skew in the sheet by causing the sheet to contact the first conveyance unit. The information of the second communication type may include information indicating that a leading end of the sheet has passed a specific position (e.g., the sensors 46 and 47) upstream from the first conveyance unit in a conveyance direction of the sheet.

The information of the second communication type may include information indicating that a trailing end of the sheet has passed a specific position (e.g., the sensor 65) downstream from the image forming unit in a conveyance direction of the sheet.

The plurality of conveyance units can include a first conveyance roller pair (e.g., the discharge roller pair 61) and a second conveyance roller pair (e.g., the conveyance roller pair 57) that simultaneously pinch and convey a single sheet. The discharge edge device 228 is an example of a first sub control unit configured to control a motor that drives the first conveyance roller pair. The fixing edge device 229 is an example of a second sub control unit configured to control a motor that drives the second conveyance roller pair. These operate cooperatively on the basis of the same information of the second communication type. The feed edge device 221 and the feed edge device 222 also operate cooperatively on the basis of the information from the sensor 46. The ITB edge device 226 and the feed edge device 221 also operate cooperatively on the basis of the information from the sensor 46.

The main control unit may transmit the communication signal to each of the plurality of sub control units in a predetermined transmission period. The central device 201 may transmit the communication packet 1300 in a predetermined period. As a result, the timing information will be updated at the predetermined transmission period.

The communication request field 1302 is an example of a request region storing a request directed at a specific sub control unit among the plurality of sub control units. The timing field 1303 is an example of a timing region storing at least one item of timing information indicating a control timing to be shared by the plurality of sub control units.

The central device 201 transmits, over a communication line corresponding to a specific sub control unit among the plurality of sub control units, a part of information of a first communication type, having a predetermined size, for the specific sub control unit. The central device 201 then transmits information of a second communication type to be shared by the plurality of sub control units over the communication line corresponding to the specific sub control unit. Furthermore, the central device 201 then transmits a remaining part of the information of the first communication type for the specific sub control unit over the communication line corresponding to the specific sub control unit. When a size of the remaining part of the information of the first communication type is smaller than the predetermined size, and the main control unit may apply padding after the remaining part. This makes it possible to adopt a simple communication format.

### 2. Second Embodiment

In the first embodiment, the size of the communication packet 1300 and the size of the timing field 1303 are fixed sizes, and the arrangement of the timing information in the timing field 1303 is also fixed. However, this is merely one example. The type of the timing information to be arranged in the timing field 1303 and the position thereof may be determined dynamically.

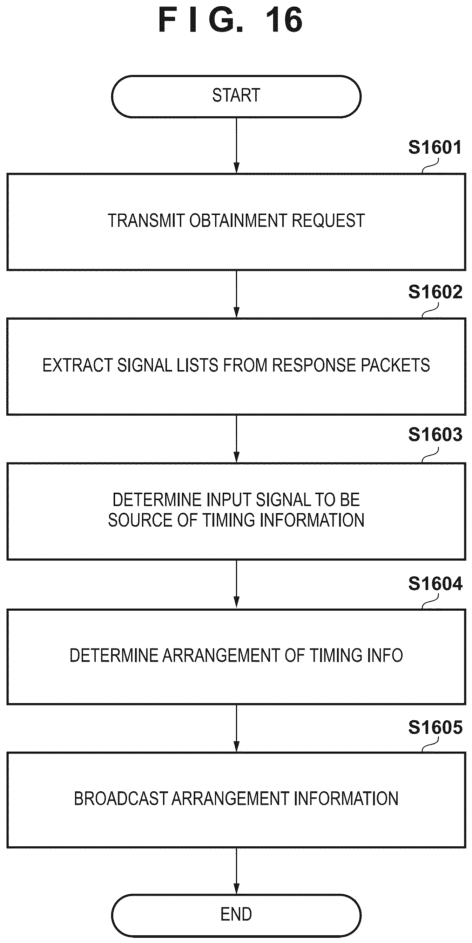

Fig. 16 illustrates a method for determining a format of communication executed by the CPU 901 of the central device 201. Here, in particular, the arrangement of a plurality of items of timing information in the timing field 1303 is determined. The CPU 901 (the communication control portion 1202) executes the following processing when the image forming apparatus is turned on.

In step S1601, the CPU 901 transmits a signal list obtainment request to each edge device 220 included in the control system 200. The signal list is a list of type information indicating a type of an input signal. In other words, the signal list is used to specify the type of the input signal and the number of input signals. The CPU 1101 of the edge device 220 loads a list of input signals present therein into a response packet and transmits the response packet to the central device 201.

In step S1602, the CPU 901 receives the response packet from each edge device 220 and extracts the signal lists from the response packets.

In step S1603, the CPU 901 determines an input signal to be the source of the timing information on the basis of the signal list and sequence information defining the image forming sequence. The signal list may include input signals not needed in the image forming sequence. Accordingly, an input signal needed in the image forming sequence is identified.

In step S1604, the CPU 901 determines the arrangement of the timing information associated with the determined input signal. Here, a priority may be associated with a plurality of items of timing information or input signals. The priority is higher for timing information necessary for operations requiring more stringent time synchronization. The priority is lower for timing information necessary for operations requiring less stringent time synchronization. The timing information having the highest priority is arranged in the first bit in the timing field 1303. The timing information assigned the second-highest priority is arranged in the second bit in the timing field 1303. The timing information assigned the i-th priority is arranged in an i-th bit i.

In step S1605, the CPU 901 broadcasts arrangement information to each edge device 220. The arrangement information is information indicating which timing information is stored in which bit of the timing field 1303. Each edge device 220 refers to the timing information stored in the timing field 1303 according to the arrangement information.

For example, the feed edge device 221 lists the sensor 46 and the sensor 47 in the signal list, and transmits the signal list to the central device 201. On the basis of the sequence information of the image forming sequence, the central device 201 arranges the timing information dependent on the sensor 47 in bit 0 and the timing information dependent on the sensor 46 in bit 1.

The image generation edge device 227 lists exposure start timings Y, M, C, and K as the timing information in the signal list and transmits the signal list to the central device 201. The central device 201 arranges the exposure start timing K (the K exposure trigger) in bit 2 on the basis of the sequence information of the image forming sequence.

The discharge edge device 228 lists the sensor 65 in the signal list, and transmits the signal list to the central device 201. On the basis of the sequence information of the image forming sequence, the central device 201 arranges a sensor ON trigger for the sensor 65 in bit 3 and a sensor OFF trigger for the sensor 65 in bit 4.

Incidentally, when a large number of optional devices are connected to the image forming apparatus 10, the total size of the timing information is expected to exceed the size of the timing field 1303. In this case, the plurality of items of timing information may be distributed and arranged among a plurality of the communication packets 1300. In this case, it is necessary for the central device 201 and each edge device 220 to distinguish the plurality of timing fields 1303 transmitted in different communication packets 1300 from each other. Accordingly, an index may be arranged at the beginning of the timing field 1303. The index being 0 indicates that the edge device 220 corresponds to a first timing field. The index being 1 indicates that the edge device 220 corresponds to a second timing field. The arrangement information transmitted in step S1605 also includes an index for distinguishing a plurality of the timing fields 1303 from each other. A time division method may be employed when distributing and arranging the plurality of items of timing information among the plurality of timing fields 1303. For example, timing information having less stringent response time constraints than other timing information may be transmitted using a time division method. For example, timing information having more stringent response time constraints is transmitted in a first communication signal. The timing information having less stringent response time constraints may be time-divided between the first communication signal and a second communication signal and transmitted.

The second embodiment is useful in an image forming apparatus 10 in which the number of optional devices varies. When the number of optional devices changes, the control sequence changes, and thus the necessary timing information also changes. Accordingly, the second embodiment, in which the arrangement of the timing information can be changed flexibly, is useful. According to the second embodiment, a load that operates on the basis of the timing information can be controlled without adding a signal line for transmitting the timing information. This makes it possible to reduce the number of signal lines. The other effects are as described in the first embodiment.

The size of the communication signal may be a fixed size. The total size of the information of the plurality of items of the second communication type to be shared by the plurality of sub control units (e.g., the edge devices 220) may exceed the size of the second region. The main control unit (e.g., the central device 201) may distribute and arrange the plurality of items of the information of the second communication type in the second regions of the plurality of communication signals. Each of the second regions of the plurality of communication signals can include identification information (e.g., an index) for distinguishing a plurality of the second regions from each other.

The central device 201 may obtain a total number of items of the information of the second communication type from the plurality of edge devices 220, and determine, in accordance with the total number of items of the information of the second communication type, whether to distribute and arrange a plurality of items of the information of the second communication type among the second regions of a plurality of the communication signals. The central device 201 may determine the size of the second region in the communication signal in accordance with the total number of items of the information of the second communication type.

### 3. Variations

In the first embodiment and the second embodiment, the size of the communication packet 1300 and the size of the timing field 1303 are fixed. However, this is merely one example. The CPU 901 may determine the size of the timing field 1303 in accordance with a total number of input signals (timing information). If the size of the communication packet 1300 is maintained, the size of the communication request field 1302 is reduced. Alternatively, the size of the communication packet 1300 may be expanded according to the size of the timing field 1303. The arrangement information transmitted in step S1605 includes information indicating the size of the communication packet 1300, the size and arrangement of each field, and the like. This enables each edge device 220 and each zone device 210 to flexibly respond to changes in the communication format.

In this manner, the central device 201 may obtain a total number of items of the information of the second communication type from the plurality of edge devices 220, and determine the size of the second region in the communication signal in accordance with the total number of items of the information of the second communication type.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image forming apparatus (10) comprising:
image forming means (150) for forming an image on a sheet;
a plurality of conveying means (33; 41) for conveying the sheet to the image forming means or conveying the sheet passed through the image forming means;
main controlling means (201) for controlling the image forming means and the plurality of conveying means in accordance with a conveyance position of the sheet; and
a plurality of sub controlling means (210; 220) for controlling the image forming means or one of the plurality of conveying means on the basis of a communication signal received from the main controlling means,
wherein while the main controlling means is transmitting information of a first communication type for a specific sub controlling means, among the plurality of sub controlling means, over a communication line corresponding to the specific sub controlling means, the main controlling means inserts transmission of information of a second communication type into an interval between successive portions of the information of the first communication type.

2. The image forming apparatus according to claim 1,
wherein the main controlling means transmits a portion of a predetermined size of the information of the first communication type, then inserts the transmission of the information of the second communication type, and thereafter resumes transmitting a remaining portion of the information of the first communication type for the specific sub controlling means.

3. The image forming apparatus according to claim 2,
wherein the communication signal transmitted to each of the plurality of sub controlling means includes:
a first region, of the predetermined size, storing the information of the first communication type for the specific sub controlling means, the specific sub controlling means being a destination, among the plurality of sub controlling means, of the communication signal; and
a second region storing information of the second communication type to be shared by the plurality of sub controlling means.

4. The image forming apparatus according to claim 3,
wherein the main controlling means includes:
a plurality of first buffering means (B1; B2; B3; B4), each provided for a corresponding one of the plurality of sub controlling means, and for accumulating the information of the first communication type; and
a second buffering means (BX) for accumulating the information of the second communication type, and
the main controlling means is further adapted to:
read out the information of the first communication type in portions each having the predetermined size from the plurality of first buffering means and store the portions of the information of the first communication type in the first region; and
read out the information of the second communication type from the second buffering means and store the information of the second communication type in the second region.

5. The image forming apparatus according to claim 3 or 4,
wherein a size of the first region and a size of the second region are each a fixed size.

6. The image forming apparatus according to any one of claims 3 to 5,
wherein each of the plurality of sub controlling means includes:
receiving means (1105) for receiving the communication signal;
extracting means (1101; 1222) for extracting the information of the first communication type from the first region of the communication signal, and extracting the information of the second communication type from the second region of the communication signal; and
executing means (1101; 1221) for executing an operation according to the information of the second communication type at a timing according to the information of the second communication type.

7. The image forming apparatus according to any one of claims 3 to 6,
wherein a size of the communication signal is a fixed size, and a size of the second region is a fixed size, and
the main controlling means is further adapted to, when a total size of a plurality of items of the information of the second communication type to be shared by the plurality of sub controlling means is greater than the size of the second region, distribute and arrange the plurality of items of the information of the second communication type among second regions, each being the second region, of a plurality of communication signals.

8. The image forming apparatus according to claim 7,
wherein each of the second regions of the plurality of communication signals includes identification information for distinguishing a plurality of the second regions from each other.

9. The image forming apparatus according to any one of claims 1 to 8,
wherein the information of the second communication type is factor information serving as a trigger for a specific operation.

10. The image forming apparatus according to any one of claims 3 to 8,
wherein the main controlling means is further adapted to:
obtain a total number of items of the information of the second communication type from the plurality of sub controlling means; and
determine, in accordance with the total number of items of the information of the second communication type, whether to distribute and arrange a plurality of items of the information of the second communication type among second regions, each being the second region, of a plurality of communication signals.

11. The image forming apparatus according to any one of claims 3 to 8,
wherein the main controlling means is further adapted to:
obtain a total number of items of the information of the second communication type from the plurality of sub controlling means; and
determine the size of the second region in the communication signal in accordance with the total number of items of the information of the second communication type.

12. The image forming apparatus according to any one of claims 1 to 11,
wherein the information of the first communication type includes content of an operation to be executed by the specific sub controlling means or content of information to be reported to the main controlling means by the specific sub controlling means.

13. The image forming apparatus according to any one of claims 1 to 12,
wherein the communication signal includes destination information indicating a destination of the communication signal.

14. The image forming apparatus according to any one of claims 1 to 13, further comprising:
detecting means (35; 46; 47) disposed upstream from the image forming means in a conveyance direction of the sheet, for detecting a leading end of a sheet,
wherein the information of the second communication type includes information indicating whether the leading end of the sheet has been detected by the detecting means.

15. The image forming apparatus according to claim 1,
wherein the information of the second communication type includes information indicating a timing of writing an image of a specific color by the image forming means.

16. The image forming apparatus according to any one of claims 1 to 15,
wherein the plurality of conveying means include a first conveying means, and a second conveying means for forming a loop in the sheet and correcting skew in the sheet by causing the sheet to contact the first conveying means, and
the information of the second communication type includes information indicating that a leading end of the sheet has passed a specific position upstream from the first conveying means in a conveyance direction of the sheet.

17. The image forming apparatus according to any one of claims 1 to 16,
wherein the information of the second communication type includes information indicating that a trailing end of the sheet has passed a specific position downstream from the image forming means in a conveyance direction of the sheet.

18. The image forming apparatus according to any one of claims 1 to 17,
wherein the plurality of conveying means include a first conveyance roller pair and a second conveyance roller pair that simultaneously pinch and convey a single sheet, and
the plurality of sub controlling means include a first sub controlling means for controlling a motor that drives the first conveyance roller pair and a second sub controlling means for controlling a motor that drives the second conveyance roller pair, and are adapted to operate in conjunction with each other on the basis of the same information of the second communication type.

19. The image forming apparatus according to any one of claims 1 to 18,
wherein the main controlling means is adapted to transmit the communication signal to each of the plurality of sub controlling means in a predetermined transmission period.

20. An image forming apparatus (10) comprising:
image forming means (150) for forming an image on a sheet;
a plurality of conveying means (33; 41) for conveying the sheet to the image forming means or conveying the sheet passed through the image forming means;
main controlling means (201) for controlling the image forming means and the plurality of conveying means in accordance with a conveyance position of the sheet; and
a plurality of sub controlling means (210; 220) for controlling the image forming means or one of the plurality of conveying means on the basis of a communication signal received from the main controlling means,
wherein the communication signal transmitted to one of the plurality of sub controlling means includes:
a first region storing information of a first communication type for a specific sub controlling means among the plurality of sub controlling means, the specific sub controlling means being a destination of the communication signal; and
a second region storing information of a second communication type configured to be shared by the plurality of sub controlling means.

21. An image forming apparatus (10) comprising:
image forming means (150) for forming an image on a sheet;
a plurality of conveying means (33; 41) for conveying the sheet to the image forming means or conveying the sheet passed through the image forming means;
main controlling means (201) for controlling the image forming means and the plurality of conveying means in accordance with a conveyance position of the sheet; and
a plurality of sub controlling means (210; 220) for controlling the image forming means or one of the plurality of conveying means on the basis of a communication signal received from the main controlling means,
wherein the communication signal transmitted to one of the plurality of sub controlling means includes:
a request region storing a request directed at a specific sub controlling means among the plurality of sub controlling means; and
a timing region storing at least one item of timing information indicating a control timing configured to be shared by the plurality of sub controlling means.

22. An image forming apparatus (10) comprising:
image forming means (150) for forming an image on a sheet;
a plurality of conveying means (33; 41) for conveying the sheet to the image forming means or conveying the sheet passed through the image forming means;
main controlling means (201) for controlling the image forming means and the plurality of conveying means in accordance with a conveyance position of the sheet; and
a plurality of sub controlling means (210; 220) for controlling the image forming means or one of the plurality of conveying means on the basis of a communication signal received from the main controlling means,
wherein the main controlling means, over a communication line corresponding to a specific sub controlling means among the plurality of sub controlling means, transmits a portion of a predetermined size of information of a first communication type for the specific sub controlling means, then transmits information of a second communication type configured to be shared by the plurality of sub controlling means, and thereafter transmits a remaining portion of the information of the first communication type for the specific sub controlling means.

23. The image forming apparatus according to claim 22,
wherein when a size of the remaining part of the information of the first communication type is smaller than the predetermined size, the main controlling means applies padding after the remaining part.
